(19) Europäisches Patentamt
European Patent Office
Office européen des brevets

(11) EP 3 616 778 B1

(12) # EUROPEAN PATENT SPECIFICATION

(45) Date of publication and mention of the grant of the patent:
**26.10.2022 Bulletin 2022/43**

(21) Application number: **18792130.9**

(22) Date of filing: **30.03.2018**

(51) International Patent Classification (IPC):
***B01D 71/56*** (2006.01) ***B01D 69/10*** (2006.01)
***B01D 69/12*** (2006.01) ***B32B 5/18*** (2006.01)
***B32B 27/34*** (2006.01) ***C08G 81/02*** (2006.01)
***B01D 65/08*** (2006.01)

(52) Cooperative Patent Classification (CPC):
**B01D 65/08; B01D 69/10; B01D 69/12; B01D 69/125; B01D 71/56;** C08G 81/02; C08G 81/024

(86) International application number:
**PCT/JP2018/014010**

(87) International publication number:
**WO 2018/198679 (01.11.2018 Gazette 2018/44)**

(54) **SEMIPERMEABLE COMPOSITE MEMBRANE AND METHOD FOR PRODUCING SAME**

SEMIPERMEABLE VERBUNDMEMBRAN UND VERFAHREN ZUR HERSTELLUNG DAVON

MEMBRANE COMPOSITE SEMI-PERMÉABLE ET SON PROCÉDÉ DE PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **28.04.2017 JP 2017089306**

(43) Date of publication of application:
**04.03.2020 Bulletin 2020/10**

(73) Proprietor: **Toray Industries, Inc.**
**Tokyo 103-8666 (JP)**

(72) Inventors:
- **YOSHIZAKI Tomoya**
**Otsu-shi**
**Shiga 520-8558 (JP)**
- **HAMADA Tsuyoshi**
**Otsu-shi**
**Shiga 520-8558 (JP)**
- **OKABE Jun**
**Otsu-shi**
**Shiga 520-8558 (JP)**
- **OGAWA Takafumi**
**Otsu-shi**
**Shiga 520-8558 (JP)**

(74) Representative: **Kador & Partner PartG mbB**
**Corneliusstraße 15**
**80469 München (DE)**

(56) References cited:
**EP-A1- 0 085 111**
**EP-A1- 1 488 846**
**EP-A1- 1 958 685**
**WO-A1-2014/133132**
**WO-A1-2015/046582**
**WO-A1-2018/003943**
**CN-A- 105 457 509**
**JP-A- 2005 169 332**
**JP-A- 2016 123 899**
**KR-A- 20140 066 588**
**US-A- 4 812 238**
**US-A1- 2005 126 987**
**US-A1- 2015 231 572**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 616 778 B1

## Description

### TECHNICAL FIELD

The present invention relates to a composite semipermeable membrane having high adhesion prevention ability against membrane foulants. The composite semipermeable membrane obtained by the present invention can be suitably used for, e.g. desalination of brine water or seawater.

### BACKGROUND ART

For separation of mixed substances, there are various techniques for removing substances (e.g., salts) dissolved in a solvent (e.g., water). More and more membrane separation techniques have been used in recent years as a process for saving energy and resources. Examples of membranes usable in the membrane separation techniques include a microfiltration membrane, ultrafiltration membrane, nanofiltration membrane, and reverse osmosis membrane. These membranes are used when obtaining drinking water from, for example, seawater, brine water, or water containing harmful substances, and when producing industrial ultrapure water, wastewater treatments, recovery of valuables, etc.

Most of the currently commercially available reverse osmosis membranes and nanofiltration membranes are composite semipermeable membranes. There are two types of composite semipermeable membranes: one has a gel layer and an active layer including a crosslinked polymer on a porous support membrane, and the other has an active layer formed by polycondensation of monomers on a porous support membrane. In particular, a composite semipermeable membrane having as a separation functional layer a crosslinked polyamide obtained by polycondensation reaction of a polyfunctional amine and a polyfunctional acid halide is widely used as a separation membrane having high permeability and high selective separation properties.

One of the problems in membrane separation technology using such a separation membrane is a fouling phenomenon. The fouling phenomenon is a phenomenon in which substances contained in the water to be treated is adsorbed on a surface or inner pores of the separation membrane so that permeation of a solution is inhibited and separation performance of the separation membrane is deteriorated. The fouling phenomenon is categorized by types of the adhering substances, and includes chemical fouling by adsorption of organic substances, biofouling by adsorption of microorganisms, and the like.

Chemical fouling is a phenomenon in which the separation membrane is clogged by organic substances, such as humic substances and surfactants contained in the water to be treated such as wastewater, being deposited on the surface of the separation membrane or adsorbed inside the separation membrane, so that the separation performance is deteriorated due to decrease in a permeate amount of the water to be treated.

On the other hand, biofouling is a phenomenon in which microorganisms contained in the water to be treated propagate on or in the separation membrane using the organic substances adsorbed on the separation membrane by the above-described chemical fouling as a nutrient source, and cause clogging of the separation membrane, so that the separation performance is deteriorated due to decrease in the permeate amount of the water to be treated.

As a method for preventing the decrease in the permeate amount associated with the fouling, a method for recovering the permeate amount by washing the fouled reverse osmosis membrane with a chemical substance such as acid or alkali (Patent Document 1) has been proposed. Further, a method for preventing fouling by coating the surface of the separation functional layer with polyvinyl alcohol (Patent Documents 2 and 3) has been proposed. Similarly, a method for preventing fouling by introducing a hydrophilic polymer having an acidic group into the surface of the separation functional layer through an amide bond has been proposed (Patent Document 4)

EP 0 085 111 A1 discloses aliphatic polyamide coatings for polyamide composite membranes. EP 1 958 685 A1 discloses polyamidemembranes with a coating to reduce fouling.

### CITATION LIST

### PATENT LITERATURE

Patent Document 1: JP-A-10-66972
Patent Document 2: WO1997/34686
Patent Document 3: WO2014/133132
Patent Document 4: WO2015/46582

## SUMMARY OF INVENTION

## TECHNICAL PROBLEM

As described above, the performance required for the separation membrane includes not only the salt removal performance and the permeate amount but also fouling resistance. The fouling resistance may include both prevention of fouling itself and prevention of performance degradation even if fouling occurs. In the method for recovering the permeate amount of the reverse osmosis membrane with reduced permeate amount by chemical washing, as described in Patent Document 1, the separation membrane is deteriorated by chemical substance contact, resulting in a lower removal rate. That is, the membrane performance changes before and after the chemical substance contact, and hence continuing stable operation over a long period of time becomes difficult.

For this reason, in order to continue stable operation over a long period of time, it is important to prevent fouling to the separation membrane. Factors causing the fouling of the separation membrane include electric charge and high hydrophobicity on the surface of the separation membrane. When the charge on the surface of the separation membrane is greatly inclined to either positive or negative, foulants having a charge opposite to the charge on the surface are adsorbed by the electrostatic interaction. Further, in a case where hydrophobicity is high on the surface of the separation membrane, hydrophobic foulants are adsorbed by the hydrophobic interaction. In the membranes described in Patent Documents 2 and 3, polyvinyl alcohol is coated on the surface of the separation functional layer to neutralize the charged state so that fouling due to various ionic foulants is prevented. However, these membranes do not have sufficient ability to prevent the decrease in permeate amount. The membrane described in Patent Document 4 can prevent fouling by introducing a polymer having a highly hydrophilic acidic group into the surface of the separation functional layer, but the ability to prevent the decrease in permeate amount is still insufficient.

An object of the present invention is to provide a composite semipermeable membrane which has high adhesion prevention ability against membrane foulants to implement excellent fouling resistance over a long period of time.

## SOLUTION FOR PROBLEM

The invention is defined by the independent claims. Preferred embodiments result from the dependent claims.

## ADVANTAGEOUS EFFECTS OF INVENTION

The separation functional layer of the composite semipermeable membrane according to the present invention is capable of achieving a high salt removal ratio by containing a crosslinked aromatic polyamide that is a polymer of a polyfunctional aromatic amine and a polyfunctional aromatic acid chloride, and is capable of preventing fouling of the separation membrane during operation by containing an aliphatic polyamide which coats the crosslinked aromatic polyamide and is a polymer of a polyfunctional aliphatic carboxylic acid and a polyfunctional aliphatic amine, as defined in claim 1.

## DESCRIPTION OF EMBODIMENTS

### 1. Composite Semipermeable Membrane

The composite semipermeable membrane of the present invention includes a support membrane including a substrate and a porous support layer, and a separation functional layer containing a crosslinked aromatic polyamide disposed on the porous support layer.

#### (1-1) Separation Functional Layer

#### (1-1-1) Overview

The separation functional layer is a layer having a solute separation function in the composite semipermeable membrane.

The separation functional layer includes a first layer containing a crosslinked aromatic polyamide, and an aliphatic polyamide present on the first layer.

#### (1-1-2) Composition

The separation functional layer contains the crosslinked aromatic polyamide as a main component. The main

component refers to a component accounting for 50% by weight or more of the components of the separation functional layer. The separation functional layer can exhibit high removal performance by containing 50 wt% or more of the crosslinked aromatic polyamide. Further, the content ratio of the crosslinked aromatic polyamide in the separation functional layer is preferably 80 wt% or more, and more preferably 90 wt% or more.

In the first layer, a proportion of the crosslinked aromatic polyamide is preferably 80 wt% or more, and more preferably 90 wt% or more. The first layer may be formed of the crosslinked aromatic polyamide only.

The first layer is disposed to be brought into contact with the porous support layer (a surface opposite to a surface in contact with the substrate).

The crosslinked aromatic polyamide can be formed by chemically reacting a polyfunctional aromatic amine and a polyfunctional aromatic acid chloride. It is preferable that at least one of the polyfunctional aromatic amine or the polyfunctional aromatic acid chloride contains a trifunctional or higher functional compound. A rigid molecular chain is hence obtained and a good pore structure for removing fine solutes, such as hydrated ions and boron, is formed.

The polyfunctional aromatic amine refers to an aromatic amine having two or more primary amino groups and/or two or more secondary amino groups in one molecule, while at least one of the amino groups is a primary amino group. Examples of the polyfunctional aromatic amine include a polyfunctional aromatic amine in which two amino groups are bonded to an aromatic ring at any of the ortho-, meta-, and para-position, such as o-phenylenediamine, m-phenylenediamine, p-phenylenediamine, o-xylylenediamine, m-xylylenediamine, p-xylylenediamine, o-diaminopyridine, m-diaminopyridine, p-diaminopyridine, or the like; a polyfunctional aromatic amine such as 1,3,5-triaminobenzene, 1,2,4-triaminobenzene, 3,5-diaminobenzoic acid, 3-aminobenzylamine, 4-aminobenzylamine, or the like; and the like. In particular, m-phenylenediamine, p-phenylenediamine, and 1,3,5-triaminobenzene are preferably used in consideration of the selective separation property, permeability, and heat resistance of the membrane. Among these, m-phenylenediamine (hereinafter also referred to as m-PDA) is more preferred because of its availability and ease in handling. The polyfunctional aromatic amine may be used alone or two or more kinds may be used in combination.

The polyfunctional aromatic acid chloride refers to an aromatic acid chloride having at least two chlorocarbonyl groups in one molecule. Examples of a trifunctional acid chloride include trimesic acid chloride and the like, and examples of a bifunctional acid chloride include biphenyl dicarboxylic acid dichloride, azobenzene dicarboxylic acid dichloride, terephthalic acid chloride, isophthalic acid chloride, naphthalene dicarboxylic acid chloride, and the like. In consideration of the selective separation property and heat resistance of the membrane, the polyfunctional aromatic acid chloride having 2 to 4 chlorocarbonyl groups in one molecule is preferable. In particular, trimesic acid chloride (hereinafter referred to as TMC), which is an acid chloride of 1,3,5-benzenetricarboxylic acid, is preferable from the viewpoints of economy, availability, ease in handling, and easy reactivity. The polyfunctional aromatic acid chloride may be used alone or as a mixture of two or more types.

90 wt% or more of each of the polyfunctional aromatic amine and the polyfunctional aromatic acid chloride, both of which constitute the crosslinked aromatic polyamide, is preferably occupied by a compound having a molecular weight of less than 1,000, and more preferably a compound having a molecular weight of less than 500. As 90 wt% or more of each of the polyfunctional aromatic amine and the polyfunctional aromatic acid chloride is occupied by a compound having a molecular weight of less than 1,000, the solubility of the polyfunctional aromatic amine and that of the polyfunctional aromatic acid chloride in solvent increase, and thus interfacial polycondensation occurs highly efficiently. Consequently, the resulting crosslinked aromatic polyamide thin film has a high solute separation function.

The above crosslinked aromatic polyamide has amide groups derived from a polymerization reaction of the polyfunctional aromatic amine and the polyfunctional aromatic acid chloride, amino groups and carboxy groups derived from unreacted terminal functional groups. An amount of these functional groups affects water permeability and salt removal ratio of the composite semipermeable membrane.

When chemical treatment is performed after the crosslinked aromatic polyamide is formed, functional groups in crosslinked aromatic polyamide can be converted or new functional groups can be introduced into the crosslinked aromatic polyamide. Because of these, the permeate amount and the salt removal ratio of the composite semipermeable membrane can be improved. Examples of functional groups that can be introduced include alkyl group, alkenyl group, alkynyl group, halogen group, hydroxyl group, amino group, carboxy group, ether group, thioether group, ester group, aldehyde group, nitro group, nitroso group, nitrile group, azo group, and the like.

For example, it is preferable to introduce an azo group into the crosslinked aromatic polyamide because the salt removal ratio is improved. When the azo group is introduced, a ratio of (molar equivalent of azo group)/(molar equivalent of amide group) in the crosslinked aromatic polyamide should be preferably 0.1 or more and 1.0 or less. When this ratio is 0.1 or more and 1.0 or less, a high salt removal ratio can be obtained.

The aliphatic polyamide is present on the surface of the first layer, that is, the surface opposite to the surface which is in contact with the porous support layer. The aliphatic polyamide may completely cover the first layer, or the first layer may be partially exposed. For the convenience of explanation, a portion located on the first layer and including the aliphatic polyamide is referred to as a "second layer", encompassing a case where the first layer is partially exposed. The separation functional layer has the first layer containing the crosslinked aromatic polyamide, and the second layer

disposed on the first layer and containing the aliphatic polyamide. That is, the substrate, the porous support layer, the first layer, and the second layer are arranged in this order.

As the aliphatic polyamide is present on the surface of the separation functional layer, even if the foulants have adhered on the surface of the separation functional layer, the foulants are prevented from adhering to the crosslinked aromatic polyamide. Consequently, the fouling of the crosslinked aromatic polyamide, which is substantially responsible for the separation function, is prevented, and the performance degradation of the separation membrane is prevented.

Hereinafter, the prevention of fouling will be described in detail.

The following three points are particularly important for preventing fouling: a charge on a membrane surface, a hydrated water amount on the membrane surface, and hydrated water mobility on the membrane surface.

Regarding the charge, the aliphatic polyamide has an amino group and a carboxy group, and the amino group has a positive charge and the carboxy group has a negative charge. That is, the surface of the separation functional layer has both positive and negative charges because of the aliphatic polyamide. In particular, when the number of amino groups is larger than the number of carboxy groups in the aliphatic polyamide, the charge of the entire aliphatic polyamide becomes positive, so that adsorption of foulants having the same positive charge can be prevented. Further, when the number of carboxy groups is larger than the number of amino groups in the aliphatic polyamide, the charge of the entire aliphatic polyamide becomes negative, so that the adsorption of foulants having the same negative charge can be prevented. Which of the aliphatic polyamide having more positive charges or the aliphatic polyamide having more negative charges should be introduced into the membrane can be determined depending on the target foulants.

The other two points will be described. It is known that water called hydrated water is present on the surface of a highly hydrophilic compound in water, and it is considered that the adsorption of foulants is prevented by a layer of the hydrated water. It is further considered as follows: as the hydrated water amount increases, the foulants are less likely to approach the membrane surface, and as the mobility of the hydration water is increased, the foulants near the membrane surface are pushed away by the hydrated water. The aliphatic polyamide formed of the polyfunctional aliphatic amine and the polyfunctional aliphatic carboxylic acid has electric charge either by protonation or deprotonation in water, and thus has a very high hydrophilicity. Consequently, the hydrated water amount on the surface of the separation function layer increases, and the hydrated water prevents the adsorption of foulants.

As the carboxy group derived from the polyfunctional aliphatic carboxylic acid or the amino group derived from the polyfunctional aliphatic amine contained in the aliphatic polyamide increases, the amount of charge in the second layer increases, and hence the hydrated water amount on the surface of the separation functional layer increases, and hence the adsorption of foulants is prevented. Further, the aliphatic carboxylic acid and the aliphatic amine are both weak electrolytes, each of which interacts electrostatically with each other, thus the interaction between them and the hydrated water is weak, and the hydrated water mobility increases. Therefore, it is considered that the ability to prevent the adsorption of foulants is improved. In addition, it is believed that since the aliphatic polyamide has higher molecular mobility than a rigid aromatic polyamide, the hydrated water mobility becomes higher and hence the ability to prevent the adsorption of foulants is improved.

As the "aliphatic polyamide containing many carboxy groups derived from polyfunctional aliphatic carboxylic acids or many amino groups derived from polyfunctional aliphatic amines", specifically, it is desirable to be a polyamide synthesized from a polyfunctional aliphatic amine having three or more amino groups in one molecule or a polyfunctional aliphatic carboxylic acid having three or more carboxy groups in one molecule.

Thus, the chemical fouling is prevented by the aliphatic polyamide, and accordingly, the biofouling is also prevented.

The presence of the aliphatic polyamide on the surface of the separation functional layer can be confirmed by repeating a series of measurement operations, i.e. analyzing a composition of the surface of the separation functional layer, etching thereafter, and further analyzing the composition. For example, X-ray photoelectron spectroscopy (XPS) can be used to measure an elemental composition and chemical bonding state on the surface of the separation functional layer. When doing so, if a measurement depth is deep, the composition of the crosslinked aromatic polyamide in the separation functional layer affects determination, and therefore it is preferable to measure the outermost surface by an angular resolution method in which a sample is slanted.

The second layer preferably contains an aliphatic polyamide as a main component. A proportion of the aliphatic polyamide in the second layer is preferably 70 wt% or more, and more preferably 90 wt% or more.

The compounds contained in the second layer may include an aromatic polyamide in addition to the aliphatic polyamide stated above. In such a case, the amount of the aromatic polyamide to the aliphatic polyamide is preferably 30 wt% or less, and more preferably 10 wt% or less. When this condition is met, the adsorption due to hydrophobic interaction and $\pi$-$\pi$ interaction between the aromatic polyamide and the foulants are prevented.

Weight average molecular weight of the aliphatic polyamide contained in the second layer is desirably 2,000 or more. When the weight average molecular weight of the aliphatic polyamide contained in the second layer is 2,000 or more, even though the foulants have adhered to the second layer, the adhesion occurs at a location away from the crosslinked aromatic polyamide substantially responsible for the separation function. Therefore, it is possible to keep

the performance deterioration of the separation membrane low. The weight average molecular weight of the aliphatic polyamide is more preferably 2,000 or more, and the upper limit is not particularly limited, but it is preferably 2,000,000 or less from the viewpoint of ease in handling the polymer solution.

Ratio of the number of carboxy groups to the number of amino groups contained in the aliphatic polyamide (functional group ratio) is preferably 0.01 to 100. It is considered that the functional group ratio falling within this range enables to balance the positive charge and the negative charge, and contributes to increase in the hydrated water mobility around the functional group by the electrostatic interaction between the functional groups, and thus enables to efficiently prevent the adsorption of various foulants.

The amount of functional groups in the separation functional layer can be determined by, for example, $^{13}C$ solid-state NMR measurement. Specifically, the substrate is peeled from the composite semipermeable membrane to obtain the separation functional layer and the porous support layer, and then the porous support layer is dissolved and removed to obtain the separation functional layer. The obtained separation functional layer is subjected to DD/MAS-$^{13}C$ solid-state NMR measurement, and an integrated value of a peak of a carbon atom to which each functional group is bonded is calculated. The amount of each functional group can be identified from this integrated value.

Monomer constituting the aliphatic polyamide will be described hereinbelow.

The polyfunctional aliphatic amine is an aliphatic compound having two or more amino groups in one molecule, and the polyfunctional aliphatic carboxylic acid is an aliphatic compound having two or more carboxy groups in one molecule. A compound having two or more carboxy groups and two or more amino groups in the same molecule is the polyfunctional aliphatic amine and also the polyfunctional aliphatic carboxylic acid.

In other words, the monomer constituting the "aliphatic polyamide that is a polymer of a polyfunctional aliphatic carboxylic acid and a polyfunctional aliphatic amine" is selected from (A) a compound in which the aliphatic polyamide is a polyfunctional aliphatic amine and is also a polyfunctional aliphatic carboxylic acid, (B) a polyfunctional aliphatic amine that is not a polyfunctional aliphatic carboxylic acid, and (C) a polyfunctional aliphatic carboxylic acid that is not a polyfunctional aliphatic amine, and the monomers are combined as, for example, (A)- (A), (A)-(B), (A)-(C), and (B)-(C). In a case where the monomer combination is (A)-(A), a polymer can be obtained by combining one compound (A) regarded as the polyfunctional aliphatic carboxylic acid and the other compound (A) regarded as the polyfunctional aliphatic amine. In a case where the monomer combination is (A)-(B) or (A)-(C), the compound (A) is considered the polyfunctional aliphatic carboxylic acid when combined with the compound (B) and is considered the polyfunctional aliphatic amine when combined with the compound (C). The aliphatic polyamide may be a polymer having three or more components, such as (A)-(B)-(C).

In the present invention, the aliphatic polyamide is a polyamide containing a monomer unit derived from a compound (A), which is a polyfunctional aliphatic amine and also a polyfunctional aliphatic carboxylic acid, and the compound (A) is a polyamide formed of a polyfunctional aliphatic amine having a weight average molecular weight of 1,000 or more and a polyfunctional carboxylic acid having a weight average molecular weight of 1,000 or more.

Moreover, the polyfunctional aliphatic amine and the polyfunctional aliphatic carboxylic acid, constituting the aliphatic polyamide, have a solubility in water of 100 g/1 L or more, respectively. The solubility of the monomer in water being 100 g/L or more means that the aliphatic polyamide is composed of highly hydrophilic compounds. That is, it is considered that the adsorption of foulants can be prevented when the aliphatic polyamide retains a large amount of hydrated water. Here, the solubility in water refers to solubility in pure water at 25°C under atmospheric pressure.

The weight average molecular weights of the polyfunctional aliphatic carboxylic acid and the polyfunctional aliphatic amine are each preferably 1,000 or more. When this condition is met, the effect of protecting the crosslinked aromatic polyamide from the foulant by the aliphatic polyamide is enhanced.

As the polyfunctional aliphatic carboxylic acid, a polymer of monomers having a carboxy group is preferred due to versatility and easy synthesis, and a polymer of monomers having an ethylenically unsaturated group is more preferred due to high chemical stability of the polymer. This polymer may be a homopolymer, but may be a copolymer of two or more types of monomers depending on the purpose, and a copolymerization ratio of the monomers is not particularly limited. Examples of the types of copolymer include a block copolymer, a graft copolymer, a random copolymer and the like, but are not particularly limited.

The polyfunctional aliphatic carboxylic acid is preferably a polymer containing a monomer unit derived from a monomer having an ethylenically unsaturated group and a carboxy group. Specifically, it is preferably a polymer containing a monomer unit derived from at least one compound selected from the group consisting of maleic acid, maleic anhydride, acrylic acid, methacrylic acid, itaconic acid, 2- (hydroxymethyl) acrylic acid and 10-methacryloyloxydecylmalonic acid. The polyfunctional aliphatic carboxylic acid preferably contains a monomer unit derived from at least one compound selected from acrylic acid, methacrylic acid, and maleic acid from the viewpoint of versatility and copolymerization.

Examples of the polyfunctional aliphatic amine preferably include polyamidoamine dendrimer and polyamino acid. According to the invention the polyfunctional aliphatic amine includes at least one selected from the group consisting of polyethyleneimine, polyallylamine, polyvinylamine, polydialkylaminoalkyl (meth) acrylate, polydialkylaminoalkyl (meth) acrylamide, polydiallylalkylamine, polydiallylamine, chitosan, and salts thereof. Among these, polyethyleneimine, polyallylamine, polyvinylamine, polydialkylaminoalkyl (meth) acrylate, polydialkylaminoalkyl (meth) acrylamide, polydiallylalkylamine, polydiallylamine, chitosan, and salts thereof are preferred from the viewpoint of versatility and easy-to-synthesize. In particular, the polyfunctional aliphatic amine preferably contains a monomer unit derived from at least one compound selected from the group consisting of vinylamine, allylamine, ethyleneimine, glucosamine, diallylamine, diallylmonoalkylamine, and diallyldialkylamine.

Here, (meth) acrylate means acrylate or methacrylate, and (meth) acryl means acryl or methacryl, respectively.

The aliphatic polyamides are preferably crosslinked by at least one of intermolecular crosslinking or intramolecular crosslinking. This is preferred from the viewpoint of long-term maintenance of fouling resistance because having a crosslinked structure enables to continuously retain a function even if it is cleaved at one location. Examples of the crosslinked structure include a structure in which a linear polymer is crosslinked using a crosslinking agent, a three-dimensional network polymer structure, a structure in which a pendant polymer and a dendrimer are connected at a plurality of points, and the like.

Further, it is preferable that a chemical bond is formed between the aliphatic polyamide and the crosslinked aromatic polyamide. Because of this, the aliphatic polyamide is more stably fixed to the crosslinked aromatic polyamide. The chemical bond between the aliphatic polyamide and the crosslinked aromatic polyamide is preferably a covalent bond, and more preferably an amide bond. The amide bond can use functional groups held by the polymer constituting each layer, and can maintain acid resistance at a high level.

(1-1-3) Properties

(i) Polyfunctional Aliphatic Carboxylic Acid and Polyfunctional Aliphatic Amine Obtained by Hydrolysis

In the present invention, it is preferable that alkaline hydrolysis of the separation functional layer produces a polyfunctional aliphatic carboxylic acid and a polyfunctional aliphatic amine, each of the polyfunctional aliphatic carboxylic acid and the polyfunctional aliphatic amine obtained by the alkaline hydrolysis has a molecular weight of 1,000 or more, and each of the polyfunctional aliphatic carboxylic acid and the polyfunctional aliphatic amine has solubility in water of 100 g/1 L or more.

That each of the polyfunctional aliphatic amine and polyfunctional aliphatic carboxylic acid resulting from the alkaline hydrolysis has molecular weight of 1,000 or more means that the aliphatic polyamide is a chemically stable compound. Therefore, such an aliphatic polyamide can maintain excellent fouling resistance even after its contact with alkali.

That each of the polyfunctional aliphatic carboxylic acid and polyfunctional aliphatic amine obtained by hydrolysis has a solubility in water of 100 g/L or more means that the aliphatic polyamide is composed of highly hydrophilic compounds. In other words, it is considered that the adsorption of foulants can be prevented as the aliphatic polyamide keeps a large amount of hydrated water. Here, the solubility in water refers to solubility in pure water at 25°C under atmospheric pressure.

The polyfunctional aliphatic carboxylic acid and polyfunctional aliphatic amine obtained by hydrolysis of the aliphatic polyamide may be or may not be the same compounds as the polyfunctional aliphatic carboxylic acid and polyfunctional aliphatic amine used for the formation of the aliphatic polyamide.

Alkaline hydrolysis is a decomposition reaction that occurs when a compound reacts with alkaline water. Alkaline hydrolysis cleaves a chemical bond in a polymer, such as an ester bond, an amide bond, an imide bond, a urethane bond or the like, and thus the polymer can be decomposed into lower molecular compounds. The alkaline hydrolysis is preferably performed under strong alkaline conditions, and more preferably being heated or pressurized, in order to efficiently decompose the separation functional layer containing the crosslinked aromatic polyamide. Specifically, alkaline hydrolysis may be performed by dissolving the separation functional layer in 40 wt% NaOH aqueous solution and heating at 100°C for 16 hours.

The polyfunctional aliphatic carboxylic acid and the polyfunctional aliphatic amine thus obtained can be measured for a weight average molecular weight by GPC (gel permeation chromatography) or ESI-MS.

The solubility is measured by bringing a target compound into contact with pure water of pH 7 at 25 °C under atmospheric pressure, stirring for 24 hours, visually checking presence or absence of residues, and determining the maximum concentration at which the residues cannot be recognized. It is determined by measuring at least 5 times and calculating an average value thereof.

(ii) Contact Angle between Separation Functional Layer and Pure Water

A contact angle between the surface of the separation functional layer of the composite semipermeable membrane in the present invention (specifically, the surface on a side of the second layer of the separation functional layer) and the pure water is preferably 38° or less. The contact angle used herein refers to a static contact angle, which means

wettability and hydrophilicity of the surface of the separation functional layer, and also means that the smaller the contact angle is, the higher the hydrophilicity is.

When the pure water is dropped on the surface of the separation functional layer, the following equation (1) called "Young's equation" is established:

$$\gamma_S = \gamma_L \cos\theta + \gamma_{SL} \qquad (1)$$

$\gamma_S$ is surface tension of the separation functional layer, $\gamma_L$ is surface tension of the pure water, and $\gamma_{SL}$ is an interfacial tension of the separation functional layer and the pure water. An angle $\theta$ formed between a tangent line of the pure water and the surface of the separation functional layer when this equation is satisfied is called the contact angle. The contact angle can be measured by widely commercially available apparatuses, for example, Contact Angle meter (manufactured by Kyowa Interface Science).

The contact angle gradually changes to a smaller value as time has elapsed. The time from the landing of the pure water on the surface of the separation functional layer to the measurement of the contact angle should be 25 seconds or less, preferably 15 seconds or less.

That the contact angle between the separation functional layer and the pure water is 38° or less means that the separation functional layer has high hydrophilicity. It is known that, generally, the higher the hydrophilicity of the separation functional layer is, the higher the water permeability is, however, since a contact frequency between the foulant and the separation functional layer increases, decrease in the water permeability due to fouling becomes larger. As a result of intensive studies, the present inventors have found that, in a case where the separation functional layer includes the second layer containing the aliphatic polyamide that is a polymer of the polyfunctional aliphatic carboxylic acid and the polyfunctional aliphatic amine, even if the contact angle between the separation functional layer and the pure water is 38° or less, high water permeability and high fouling resistance can be achieved at the same time. The contact angle is more preferably 35° or less, and even more preferably 20° or less.

As a result of intensive studies, the present inventors have found that there is a close relationship between a surface zeta potential of the separation functional layer, a permeate amount of the composite semipermeable membrane, and releasability of the membrane foulants.

The zeta potential is a scale of a net fixed charge on a surface of an ultrathin film layer. The zeta potential on the surface of the thin film layer of the present invention can be obtained from electric mobility in accordance with the Helmholtz-Smoluchowski equation as shown in the following equation (2).

[Eq. 1]

$$\text{Zeta potential} \quad \zeta = \frac{4\pi\eta U}{\varepsilon} \qquad (2)$$

(In equation (2), U is electric mobility, $\varepsilon$ is a dielectric constant of a solution, and $\eta$ is a viscosity of the solution.)

For the dielectric constant and the viscosity of the solution, values at a measurement temperature disclosed in literature are used.

The principle of the zeta potential measurement will be described. When a solution or an aqueous solution comes in contact with a material, an immobilized stationary layer occurs in the vicinity of a surface of the material due to the influence of charges on the surface. The zeta potential is a potential for the solution at an interface (shear plane) between the stationary layer and diffuse layer of the material.

Consider an aqueous solution in a quartz glass cell. Since a quartz surface is normally negatively charged, positively charged ions and particles accumulate near a cell surface. On the other hand, negatively charged ions and particles increase in the center of the cell, and hence ion distribution occurs in the cell. When an electric field is applied in this state, the ion distribution is reflected in the cell, and ions move at different migration speeds at positions in the cell (referred to as electrophoretic mobility). Since the migration speed reflects the charge on the cell surface, the charge on the cell surface (surface potential) can be evaluated by obtaining this migration speed distribution.

The zeta potential is measured by using a membrane sample having a size of 20 mm × 30 mm, and standard particles for electrophoresis dispersed in an aqueous NaCl solution adjusted to have a predetermined concentration for measurement. The particles are polystyrene particles (particle size: 520 nm), of which a surface is coated with hydroxypropyl cellulose. As a measuring instrument, for example, an electrophoretic light scattering photometer ELS-8000 (manufactured by Otsuka Electronics) can be used.

In the composite semipermeable membrane of the present invention, the surface zeta potential of the separation functional layer is controlled to fall within a range of ± 15 mV when measured at pH 6 under NaCl 10 mM, and it is

desirable that, under NaCl 10 mM, the surface zeta potential of the separation functional layer at pH 6 is at least 15 mV higher than the surface zeta potential of the separation functional layer at pH 11.

The first layer of the separation functional layer contains an amino group derived from the polyfunctional aromatic amine and a carboxy group derived from the polyfunctional aromatic acid chloride. The second layer contains an amino group derived from the polyfunctional aliphatic amine and a carboxy group derived from the polyfunctional aliphatic carboxylic acid. The surface zeta potential value varies depending on a degree of dissociation of these functional groups contained in the first layer and the second layer.

The surface zeta potential at pH 6 of the separation functional layer is related to the adsorption of membrane foulants. When the surface zeta potential is controlled to be within ± 15 mV at pH 6 under NaCl concentration of 10 mM, the interaction between the membrane foulants and a membrane surface material can be inhibited. The surface zeta potential being within a range of ± 15 mV indicates that the membrane surface is electrically neutral. When the membrane surface is electrically neutral, the electrical interaction between the membrane surface and the membrane foulants having charged groups present in water is inhibited.

On the other hand, when a pH is changed from a neutral region where an absolute value of the surface zeta potential is small, and change in the surface zeta potential is large, permeate amount recoverability of the membrane to which the foulants have adhered increases. It is considered because a charge balance of the surface changes significantly along with the pH change, and the release of the foulants adhered to the surface of the separation functional layer is accelerated by hydrophilicity change and electrostatic repulsion. If the surface zeta potential at pH 6 is at least 15 mV higher than the surface zeta potential at pH 11, the release of the foulants adhered to the surface of the separation functional layer is sufficiently accelerated, and high permeate amount recoverability can be achieved.

Root-mean-square surface roughness of the separation functional layer surface is preferably 60 nm or more. When the root-mean-square surface roughness is 60 nm or more, a surface area of the separation functional layer increases and the permeate amount increases.

The root-mean-square surface roughness can be measured with an atomic force microscope (hereinafter referred to as AFM). The root-mean-square surface roughness is the square root of a value obtained by averaging squares of deviations from a reference surface to a specified surface. A measurement surface is a surface indicated by all measurement data, the specified surface is a surface that is subject to roughness measurement and refers to a specific portion specified by a clip within the measurement surface, and the reference surface is a surface represented by $Z = Z0$ when an average height of the specified surface is Z0. As the AFM, for example, NanoScope IIIa (manufactured by Digital Instruments) can be used.

The root-mean-square surface roughness of the separation functional layer can be controlled by the concentration and temperature of the monomer at the time of the formation of the separation functional layer by interfacial polycondensation. For example, when the temperature during interfacial polycondensation is low, the root-mean-square surface roughness becomes small, and when the temperature is high, the root-mean-square surface roughness becomes large. Further, when the second layer is thick, the root-mean-square surface roughness becomes small.

(1-2) Support Membrane

The support membrane is for imparting strength to the separation functional layer, which has substantially no separation performance for ions or the like. The support membrane includes the substrate and the porous support layer.

Pore size or pore distribution of the support membrane is not specifically limited, but for example, support membrane is preferably the one having uniform micropores, or the one having micropores which become gradually larger from a surface on a side where the separation functional layer is formed to a surface on the other side, and have a size in range of 0.1 nm to 100 nm on the surface on the side where the separation functional layer is formed.

The support membrane can be obtained, for example, by forming the porous support layer on the substrate by pouring a polymer on the substrate. A material used for the support membrane and shape thereof are not particularly limited.

Examples of the substrate include a fabric made of at least one selected from polyester and an aromatic polyamide. It is particularly preferred to use polyester which is highly stable mechanically and thermally.

For the fabric to be used as the substrate, a long-fiber nonwoven fabric and a short-fiber nonwoven fabric can both be preferably used. The long-fiber nonwoven fabric is more preferred since the substrate is required to have sufficient film-forming properties thereby preventing a polymer solution from reaching to a back surface due to excessive penetration when the polymer solution is poured on the substrate, preventing the porous support layer from being delaminated from the substrate, or preventing the membrane from having unevenness due to substrate fluffing or defects such as pinholes or the like.

Examples of the long-fiber nonwoven fabric include a long-fiber nonwoven fabric formed of a thermoplastic continuous filament. The substrate made of the long-fiber nonwoven fabric can reduce unevenness occurring upon pouring the polymer solution due to substrate fluffing or membrane defects, which is caused when the short-fiber non-

woven fabric is used. In addition, since tension is imposed on the substrate along a direction of membrane formation in the continuous production of a composite semipermeable membrane, it is preferred to use a long-fiber nonwoven fabric for the substrate, which has better dimensional stability.

In particular, it is preferred that the fibers of the substrate on the side opposite to the porous support layer are longitudinally oriented with respect to the direction of membrane formation to maintain the strength of the substrate and to prevent membrane breakage. The term "longitudinally oriented" means that the fibers are oriented in parallel with the direction of membrane formation. On the other hand, when the fibers are oriented perpendicular to the direction of membrane formation, the fibers are "transversely oriented."

It is preferred that a degree of fiber orientation in the non-woven fabric substrate is 0° to 25° on the side opposite to the porous support layer. The "degree of fiber orientation" as used herein refers to an index that indicates the directions of the fibers of a nonwoven fabric substrate constituting the support membrane. That term means an average angle of fibers constituting the nonwoven fabric substrate when the direction of membrane formation in continuous membrane formation is taken as 0° and the direction perpendicular to the membrane formation direction, i.e., the width direction of the nonwoven fabric substrate, is taken as 90°. Accordingly, the closer the degree of fiber orientation to 0°, the more the fibers are longitudinally oriented; and the closer the degree of fiber orientation to 90°, the more the fibers are transversely oriented.

Steps for producing a composite semipermeable membrane or for producing an element include a step of heating. A phenomenon in which the support membrane or the composite semipermeable membrane shrinks occurs due to the heating. Especially in continuous membrane formation, no tension is imposed in the width direction, and thus the shrinkage tends to occur in the width direction. Since the shrinkage of the support membrane or the composite semipermeable membrane causes problems concerning dimensional stability, etc., substrates having a low degree of thermal dimensional change are desirable.

When the nonwoven fabric substrate has a difference in the degrees of fiber orientation between the fibers on the side opposite to the porous support layer and the fibers on a side of the porous support layer of 10° to 90°, changes along the width direction due to heating can be prevented and is hence preferred.

It is preferred that the substrate has an air permeability of 2.0 $cc/cm^2/sec$ or more. When the air permeability falls within this range, a permeate amount of the composite semipermeable membrane increases. This is considered because, in a step for forming the support membrane, when the polymer solution is poured on the substrate and the substrate is immersed in a coagulating bath, non-solvent displacement rate from the substrate side increases and thus the inner structure of the porous support layer is changed and the result exerts an influence on retention and diffusion velocity of the monomers in subsequent steps for forming the separation functional layer.

The air permeability can be measured using a Frazier type air permeability tester according to JIS L1096 (2010). For example, sample pieces of 200 mm × 200 mm are cut out from the substrate. The sample pieces are mounted on the Frazier air permeability tester. The suction fan and the air holes are adjusted such that the pressure of the inclination barometer reaches 125 Pa. The amount of air passing through the substrate, i.e. air permeability is calculated based on the pressure indicated by the vertical barometer at this time and types of air holes used during measurement. KES-F8-AP1 Air Permeability Tester, manufactured by KATO TECH CO., LTD., can be adopted as the Frazier type air permeability tester.

The thickness of the substrate is preferably in a range of 10 μm to 200 μm, more preferably in a range of 30 μm to 120 μm.

Examples of a material of the porous support layer include homopolymers and copolymers such as polysulfones, polyethersulfones, polyamides, polyesters, cellulosic polymers, vinyl polymers, polyphenylene sulfide, polyphenylene sulfide sulfones, polyphenylene sulfones, and polyphenylene oxide. One of such polymers can be used alone, or a blend of two or more thereof can be used. The cellulosic polymers including cellulose acetate and cellulose nitrate may be used. The vinyl polymers including polyethylene, polypropylene, polyvinyl chloride, and polyacrylonitrile may be used. Among these, homopolymers or copolymers such as polysulfones, polyamides, polyesters, cellulose acetate, cellulose nitrate, polyvinyl chloride, polyacrylonitrile, polyphenylene sulfide, and polyphenylene sulfide sulfones are preferred. Among these, cellulose acetates, polysulfones, polyphenylene sulfide sulfones, or polyphenylene sulfones are more preferably used. Of these materials, polysulfones are generally used because it is highly stable chemically, mechanically and thermally, and easy to mold.

Specifically, it is preferred to use a polysulfone consisting of repeating units represented by the following chemical formula, since it allows pore diameter of the support membrane to be controlled easily and brings high dimensional stability.

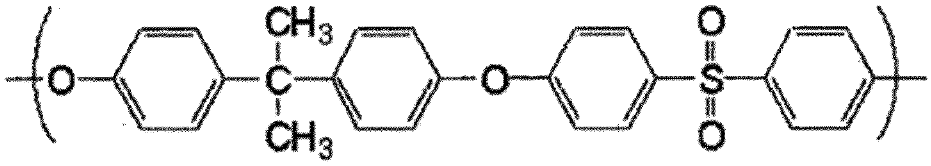

For example, an N,N-dimethylformamide (hereinafter referred to as DMF) solution of the polysulfone is poured on a densely woven polyester fabric or polyester nonwoven fabric in certain thickness, and the cast solution is coagulated by a wet process in water. As a result, the support membrane in which most of the surface has fine pores having a diameter of 10 nm or less can be obtained.

The thickness of the support membrane described above affects the strength of the composite semipermeable membrane and the packing density of the composite semipermeable membrane incorporated into an element. In order to obtain sufficient mechanical strength and packing density, the thickness of the support membrane preferably falls within a range of 30 μm to 300 μm, more preferably within a range of 100 μm to 220 μm.

The shape of the porous support layer can be observed with a scanning electron microscope, a transmission electron microscope or an interatomic microscope. For example, when the scanning electron microscope is used for observation, the porous support layer is removed from the substrate and freeze-fractured into sample pieces for cross-section observation. The sample pieces are thinly coated with platinum, platinum-palladium, or ruthenium tetrachloride, preferably with ruthenium tetrachloride, and observed by an ultra-high-resolution field emission scanning electron microscope (UHR-FE-SEM) at an accelerating voltage of 3 kV to 15 kV. As the ultra-high resolution field emission scanning electron microscope, S-900 Electron Microscope (manufactured by Hitachi) can be used.

The support membrane used in the present invention can be selected from various commercially available materials such as "Millipore Filter VSWP" (trade name, manufactured by Millipore Corporation) or "Ultrafilter UK-10" (trade name, manufactured by Toyo Roshi Kaisha, Ltd.), and also can be prepared in accordance with a process described in "Office of Saline Water Research & Development Progress Report No. 359" (1968).

The thickness of the porous support layer preferably falls within a range of 20 μm to 100 μm. With the porous support layer having the thickness of 20 μm or more, the excellent pressure resistance and the uniform support membrane without defects can be achieved, hence the composite semipermeable membrane with such a porous support layer shows the advantageously enhanced salt removal performance. When the porous support layer has the thickness exceeding 100 μm, a residual amount of substances unreacted during the production increases, thus permeate amount decreases and chemical resistance is lowered

The thickness of the substrate and that of the composite semipermeable membrane can be measured by a digital thickness gauge. Since the separation functional layer (described below) is significantly thinner compared with the support membrane, the thickness of the composite semipermeable membrane can be considered as the thickness of the support membrane. Therefore, the thickness of the porous support layer can be easily calculated by measuring the thickness of the composite semipermeable membrane with the digital thickness gauge and subtracting the thickness of the substrate from the thickness of the composite semipermeable membrane. As the digital thickness gauge, PEACOCK, manufactured by OZAKI MFG. CO., LTD., can be used. When the digital thickness gauge is used, the thickness at twenty locations should be measured to calculate the average value.

Further, when it is difficult to measure the thickness of the substrate or the composite semipermeable membrane with the thickness gauge, the thickness may be measured with a scanning electron microscope. The thickness is measured from cross-sectional electron microscope images which are taken at arbitrary five locations of one sample piece, and the average value is calculated to obtain the thickness.

2. Production Method

A method for producing the composite semipermeable membrane described above will be described hereinbelow. The production method includes a step of forming a support membrane and a step of forming a separation functional layer.

(2-1) Step of Forming Support Membrane

The step of forming a support membrane includes a step of applying a polymer solution to a substrate and a step of solidifying the polymer by immersing the substrate on which the solution has been applied in a coagulating bath.

In the step of applying the polymer solution to the substrate, the polymer solution is prepared by dissolving a polymer that is a component of the porous support layer in a good solvent for such a polymer.

The temperature of the polymer solution at the time of the application of the polymer solution is preferably 10°C

or higher and 60°C or lower, when a polysulfone is used as the polymer. When the temperature of the polymer solution falls within this range, the polymer does not precipitate, and the polymer solution is sufficiently impregnated among fibers of the substrate and then solidified. As a result, the porous support layer is firmly bonded to the substrate by anchor effect, and an excellent support membrane can be obtained. The preferred temperature range of the polymer solution can be adjusted as appropriate depending on types of the polymer, the desired solution viscosity, and the like.

It is preferable that the time period from the application of the polymer solution on the substrate to immersion in the coagulating bath is 0.1 second or more and 5 seconds or less. When the time period until the substrate is immersed in the coagulating bath falls within this range, the organic solvent solution containing the polymer is sufficiently impregnated among the fibers of the substrate and then solidified. The preferred range of the time period until the substrate is immersed in the coagulating bath can be adjusted as appropriate depending on types of the polymer solution, the desired solution viscosity, and the like.

As the coagulating bath, water is typically used, but any matter that does not dissolve the polymer that is a component of the porous support layer may be used. A membrane shape of the obtained support membrane changes depending on the composition of the coagulating bath, and the resultant composite semipermeable membrane also changes. The temperature of the coagulating bath is preferably -20°C or higher and 100°C or lower, more preferably 10°C or higher and 50°C or lower. When the temperature of the coagulating bath falls within this range, the vibration of a coagulating bath surface due to a thermal motion does not become intense, and smoothness of the membrane surface after film formation is maintained. Further, when the temperature falls within this range, a solidification rate is appropriate and the film-forming properties are good.

The support membrane thus obtained is washed with hot water in order to remove the solvent remaining in the membrane. A temperature of the hot water at this time is preferably 40°C or higher and 100°C or lower, more preferably 60°C or higher and 95°C or lower. When the temperature falls within this range, shrinkage of the support membrane does not become large and the permeate amount is excellent. Further, when the temperature falls within this range, the cleaning effect is sufficient.

(2-2) Step of Forming Separation Functional Layer

(2-2-1) Overview

The step of forming a separation functional layer constituting the composite semipermeable membrane will be described next. The step of forming a separation functional layer includes the following steps (a) and (b) in this order:

(a) a step of forming a first layer containing a crosslinked aromatic polyamide by performing interfacial polycondensation on the porous support layer using an aqueous solution containing a polyfunctional aromatic amine and an organic solvent solution containing a polyfunctional aromatic acid chloride; and
(b) a step of disposing a second layer on the first layer, in which the second layer contains an aliphatic polyamide that is a polymer of a polyfunctional aliphatic carboxylic acid and a polyfunctional aliphatic amine.

(2-2-2) (a) Step of Forming First Layer Containing Crosslinked Aromatic Polyamide

In step (a), the organic solvent for dissolving the polyfunctional aromatic acid chloride can be any organic solvent as long as it is immiscible with water, does not destroy the support membrane, and does not inhibit the reaction for forming the crosslinked aromatic polyamide. Typical examples of the organic solvent include liquid hydrocarbons and halogenated hydrocarbons such as trichlorotrifluoroethane. Considering that it should be a substance that does not destroy the ozone layer, is easily available, ease in handling, and safe in handling, preferred is octane, nonane, decane, undecane, dodecane, tridecane, tetradecane, heptadecane, hexadecane, cyclooctane, ethylcyclohexane, 1-octene, 1-decene or the like, either alone or a mixture thereof.

The aqueous solution containing the polyfunctional aromatic amine (polyfunctional aromatic amine aqueous solution) or an organic solvent solution containing the polyfunctional aromatic acid chloride (polyfunctional aromatic acid chloride-containing solution) may contain a compound such as an acylation catalyst, a polar solvent, an acid scavenger, a surfactant, and an antioxidant, if needed, as long as it does not interfere with the reaction between the two components.

In order to perform interfacial polycondensation on the support membrane, the support membrane surface is first coated with a polyfunctional aromatic amine aqueous solution. The concentration of the aqueous solution containing the polyfunctional aromatic amine is preferably 0.1 wt% or more and 20 wt% or less, more preferably 0.5 wt% or more and 15 wt% or less.

For a method for coating the surface of the support membrane with the polyfunctional aromatic amine aqueous solution, only required is that the surface of the support membrane is uniformly and continuously coated with this aqueous solution. Known coating methods, for example, a method for coating the aqueous solution on the surface of support

membrane, or a method for immersing the support membrane in the aqueous solution, or the like may be employed. Contact time between the support membrane and the polyfunctional aromatic amine aqueous solution preferably falls within a range of 5 seconds to 10 minutes, and more preferably within a range of 10 seconds to 3 minutes. Preferably, the excessively applied aqueous solution should be subsequently removed by a liquid draining step. The liquid draining methods include, for example, a method in which the membrane surface is held vertically to allow the excessively applied aqueous solution to flow down naturally and be thus removed. After the draining, the membrane surface may be dried to remove all or part of the water in the aqueous solution.

Thereafter, the polyfunctional aromatic acid chloride-containing solution described above is applied to the support membrane coated with the polyfunctional aromatic amine aqueous solution to form the crosslinked aromatic polyamide by interfacial polycondensation. The time period for performing the interfacial polycondensation is preferably in a range of 0.1 seconds or longer and 3 minutes or shorter, and more preferably in a range of 0.1 seconds or longer and 1 minute or shorter.

Concentration of the polyfunctional aromatic acid chloride in the polyfunctional aromatic acid chloride-containing solution is not particularly limited, but if it is too low, the formation of the first layer, which is an active layer, may be insufficient and the first layer may be defective, and if it is too high, it is disadvantageous from the viewpoint of costs. Therefore, it is preferred to be 0.01 wt% or more and 1.0 wt% or less.

Preferably, the organic solvent remaining after the reaction should be subsequently removed by a liquid draining step. For draining the organic solvent, for example, a method in which the membrane is held vertically to allow the excess organic solvent to flow down naturally and be thus removed, can be used. In this case, the time period of vertically holding the membrane preferably is 1 minute or longer and 5 minutes or shorter, more preferably 1 minute or longer and 3 minutes or shorter. When holding the membrane for 1 minute or longer, the crosslinked aromatic polyamide having the function of interest can be easily obtained. When holding the membrane for 3 minutes or shorter, the occurrence of defects due to overdrying of the organic solvent can be prevented, thereby preventing performance deterioration.

(2-2-3) (b) Step of Disposing Second Layer on First Layer

In step (b), the second layer containing the aliphatic polyamide that is a polymer of a polyfunctional aliphatic carboxylic acid and a polyfunctional aliphatic amine is disposed on the surface of the first layer.

Specifically, step (b) includes at least one of the following steps (b1) and (b2):

(b1) forming an aliphatic polyamide by polymerizing a polyfunctional aliphatic carboxylic acid and a polyfunctional aliphatic amine, and bringing the aliphatic polyamide in contact with a layer of the crosslinked aromatic polyamide; and
(b2) condensing a polyfunctional aliphatic carboxylic acid and a polyfunctional aliphatic amine on the layer of the crosslinked aromatic polyamide.

The crosslinked aromatic polyamide hardly lets any of aliphatic polyamide, polyfunctional aliphatic carboxylic acid and polyfunctional aliphatic amine pass through. Therefore, the second layer can be formed on the surface of the first layer by performing at least one of the steps (b1) and (b2) on the first layer.

In the step (b1), the second layer may be formed by coating a solution containing a pre-synthesized aliphatic polyamide on the crosslinked aromatic polyamide, or the second layer may be formed by immersing the membrane containing the crosslinked aromatic polyamide in a solution containing a pre-synthesized aliphatic polyamide.

The aliphatic polyamide to be brought into contact with the crosslinked aromatic polyamide may be used alone or in combination. The aliphatic polyamide is preferably used as an aqueous solution having a weight concentration of 0.001 wt% or more and 1 wt% or less. When the concentration of the aliphatic polyamide is 0.001 wt% or more, the second layer can be efficiently formed in a relatively short time. Further, when the concentration of the aliphatic polyamide is 1 wt% or less, a moderately thin layer of the aliphatic polyamide is formed, and thus decrease in water permeability is prevented.

In the step (b2), the aliphatic polyamide is produced by condensation of the polyfunctional aliphatic amine and polyfunctional aliphatic carboxylic acid on the surface of the crosslinked aromatic polyamide, by which the second layer is also formed on the crosslinked aromatic polyamide.

In the step (b2), the polyfunctional aliphatic amine and the polyfunctional aliphatic carboxylic acid are each preferably used as an aqueous solution having a weight concentration of 0.001 wt% or more and 1 wt% or less. When the respective concentration is 0.001 wt% or more, the aliphatic polyamide can be efficiently produced, and the second layer can be efficiently formed in a relatively short time. Further, when the respective concentration of the aliphatic polyamide is 1 wt% or less, a moderately thin layer of the aliphatic polyamide is formed, and thus decrease in water permeability is prevented.

In any step, the reaction between the polyfunctional aliphatic amine and the polyfunctional aliphatic carboxylic acid can be used for the synthesis of the aliphatic polyamide. In this reaction, the reaction between the amino group of

the polyfunctional aliphatic amine and the carboxy group of the polyfunctional aliphatic carboxylic acid forms an amide bond.

Further, in the synthesis of the aliphatic polyamide used in the step (b1) or the synthesis of the aliphatic polyamide in the step (b2), in order to make the reaction progress with high efficiency and a short time, various reaction auxiliaries (condensation accelerators) can be used for the reaction. Examples of the condensation accelerator include sulfuric acid, 4-(4,6-dimethoxy-1,3,5-triazin-2-yl)-4-methylmorpholinium chloride (DMT-MM), 1-(3-dimethylaminopropyl)-3-ethyl carbodiimide hydrochloride, N,N'-dicyclohexylcarbodiimide, N,N'-diisopropylcarbodiimide, N,N'-carbonyldiimidazole, 1,1'-carbonyldi (1,2,4-triazole), 1H-benzotriazol-1-yl oxytris (dimethylamino) phosphonium hexafluorophosphate, (7-azabenzotriazol-1-yloxy) tripyrrolidinophosphonium hexafluorophosphate, chlorotripyrrolidinophosphonium hexafluorophosphate, bromotris (dimethylamino) phosphonium hexafluorophosphate, 3-(diethoxyphosphoryloxy)-1,2,3-benzotriazin-4 (3H)-one, O-(benzotriazol-1-yl)-N,N,N',N'-tetramethyluronium hexafluorophosphate, O-(7-azabenzotriazol-1-yl)-N,N,N',N'-tetramethyluronium hexafluorophosphate, O-(N-succinimidyl)-N,N,N',N'-tetramethyluronium tetrafluoroborate, O-(N-succinimidyl)-N,N,N',N'-tetramethyluronium hexafluorophosphate, O-(3,4-dihydro-4-oxo-1,2,3-benzotriazin-3-yl)-N,N,N',N'-tetramethyluronium tetrafluoroborate, trifluoromethanesulfonic acid (4,6-dimethoxy-1,3,5-triazin-2-yl)-(2-octoxy-2-oxoethyl) dimethylammonium, S-(1-oxide-2-pyridyl)-N,N,N',N'-tetramethylthiuonium tetrafluoroborate, O-[2-oxo-1(2H)-pyridyl]-N,N,N',N'-tetramethyluronium tetrafluoroborate, {{[(1-cyano-2-ethoxy-2-oxoethylidene)amino]oxy}-4-morpholinomethylene}dimethylammonium hexafluorophosphate, 2-chloro-1,3-dimethylimidazolinium hexafluorophosphate, 1-(chloro-1-pyrrolidinylmethylene) pyrrolidinium hexafluorophosphate, 2-fluoro-1,3-dimethylimidazolinium hexafluorophosphate, fluoro-N,N,N' ,N' -tetramethylformamidinium hexafluorophosphate, and the like.

The reaction time and the concentration of the compound in the synthesis of the aliphatic polyamide can be appropriately adjusted depending on the solvent, the condensation accelerator and chemical structures of the compound, which are used in the reaction. However, from the viewpoint of productivity, the reaction time is preferably 24 hours or less, more preferably 12 hours or less, even more preferably 6 hours or less, and particularly preferably 1 hour or less.

The aliphatic polyamide used in step (b1) may be purified after synthesis by removing a residual compound.

Further, another compound can also be mixed with the aliphatic polyamide solution as needed. For example, in order to remove substances remaining in the crosslinked aromatic polyamide, i.e. water-immiscible organic solvents, monomers such as polyfunctional acid chlorides and polyfunctional amines, and oligomers resulting from the reaction of these monomers, it is preferable to further add a surfactant such as sodium dodecyl sulfate or sodium benzenesulfonate.

The step (b) may further include a step (c) of forming an amide bond between the crosslinked aromatic polyamide and the aliphatic polyamide.

Specifically, the amide bond can be formed between the crosslinked aromatic polyamide and the aliphatic polyamide either by a reaction between the amino group of the aliphatic polyamide and the carboxy group of the crosslinked aromatic polyamide, or by a reaction between the carboxy group of the aliphatic polyamide and the amino group of a crosslinked aromatic polyamide.

The formation of the amide bond in the step (c) may be performed after the step (b1) and/or the step (b2), or may be performed in parallel with the step (b1) and/or the step (b2), however, more aliphatic polyamide can be deposited on the crosslinked aromatic polyamide by performing the step (c) after the step (b1) and/or the step (b2).

When the amide bond is formed between the crosslinked aromatic polyamide and the aliphatic polyamide, the carboxy group is preferably in a state of high reaction activity. The carboxy group in the state of high reaction activity may be an unreacted carboxy group of the carboxylic acid forming the crosslinked aromatic polyamide or the aliphatic polyamide, or may be a highly reactive functional group such as an active ester group obtained by converting the carboxy group with an amidation accelerator.

For example, the polyfunctional aromatic acid chloride used for forming the crosslinked aromatic polyamide has an acid chloride group that is a carboxy group having high reaction activity. Immediately after the formation of the crosslinked aromatic polyamide, the acid chloride group remains in the crosslinked aromatic polyamide. Therefore, the acid chloride group easily reacts with the amino group held by the aliphatic polyamide to form the amide bond without any treatment for increasing the activity of the functional group. Further, when the aliphatic carboxylic acid used for forming the aliphatic polyamide has an acid fluoride group, immediately after the formation of the aliphatic polyamide, the acid fluoride group that is a carboxy group having high reaction activity remains in the aliphatic polyamide. Therefore, the acid fluoride group reacts with the amino group held by the crosslinked aromatic polyamide to easily form the amide bond. Further, an acid fluoride group held by an unreacted aliphatic carboxylic acid may react with the amino group held by the aromatic polyamide to form the amide bond, and then the aliphatic amine is bonded to the aliphatic carboxylic acid to form the aliphatic polyamide. Using these reactions, the amide bond can be formed between the crosslinked aromatic polyamide and the aliphatic polyamide with high efficiency and a short period of time.

The terms "immediately after the formation of the crosslinked aromatic polyamide" and "immediately after the formation of the aliphatic polyamide" indicate that, after forming the polyamide, no other steps such as washing are performed, and not so long time has passed as the functional group is deactivated after the polyamide is formed.

A step of bringing a solution containing an amidation accelerator into contact with either or both of the crosslinked

aromatic polyamide and the aliphatic polyamide will be described. Using the amidation accelerator, it is possible to form the amide bond between the crosslinked aromatic polyamide and the aliphatic polyamide with high efficiency and a short time period. As the amidation accelerator, the same compound as the condensation accelerator described above can be used. Examples of the amidation accelerator also include alkaline metal compounds such as sodium carbonate, sodium hydroxide, sodium phosphate, and the like.

The reaction time of the amide bond formation between the crosslinked aromatic polyamide and the aliphatic polyamide and the concentration of the amidation accelerator can be appropriately adjusted depending on the solvent, the amidation accelerator, chemical structures of the aliphatic polyamide and the crosslinked aromatic polyamide, which are used in the reaction. Specifically, from the viewpoint of productivity, the reaction time is preferably 24 hours or less, more preferably 1 hour or less, even more preferably 10 minutes or less, and particularly preferably 3 minutes or less. After the reaction is completed, it is preferable to wash the obtained composite semipermeable membrane with water, hot water or an appropriate organic solvent to remove the reactive compounds.

(2-2-4) (d) Conversion Step of Amino Group in Crosslinked Aromatic Polyamide into Another Functional Group

The method for producing a composite semipermeable membrane may further include a step (d) of converting the amino group of the crosslinked aromatic polyamide into another functional group. The step (d) is performed after the step (b).

In the step (d), the amino group of the crosslinked aromatic polyamide is converted into another functional group by bringing it into contact with a reagent that converts the amino group into another functional group. It is preferable to perform functional group conversion by contacting with a reagent that reacts with an amino group to produce a diazonium salt or a derivative thereof. Examples of the reagent that reacts with an amino group to produce a diazonium salt or a derivative thereof include aqueous solutions of nitrous acid and salts thereof, nitrosyl compounds, and the like. Since aqueous solutions of nitrous acid and nitrosyl compounds have the property of decomposing by generating gas, it is preferable to sequentially generate nitrous acid by the reaction between nitrite and acidic solution. In general, nitrite reacts with hydrogen ions to produce nitrous acid ($HNO_2$), more efficiently when pH of the aqueous solution is 7 or less, preferably 5 or less, and more preferably 4 or less. Among these, an aqueous solution of sodium nitrite obtained by reacting with hydrochloric acid or sulfuric acid in an aqueous solution is particularly preferable because of its easy handling property.

The concentration of nitrous acid or nitrite in the reagent that reacts with an amino group to produce a diazonium salt or a derivative thereof preferably falls within a range of 0.01 wt% or more and 1 wt% or less, more preferably within a range of 0.05 wt% or more and 0.5 wt% or less. When the concentration is 0.01 wt% or more, a sufficient effect can be obtained, and when the concentration is 1 wt% or less, the solution can be easily handled.

Temperature of the nitrous acid aqueous solution is preferably 15°C or higher and 45°C or lower. When the temperature is 15°C or higher, sufficient reaction time can be obtained, and when the temperature is 45°C or lower, decomposition of nitrous acid hardly occurs and it can be easily handled.

Contact time with the nitrous acid aqueous solution has only to be a time during which at least one of a diazonium salt and a derivative thereof is formed. It can be processed in a short time at a high concentration, but a longer time is necessary at a low concentration. Therefore, the solution having the concentration stated above is preferably brought into contact for 10 minutes or shorter, and more preferably 3 minutes or shorter. A method for bringing into contact is not particularly limited, and the reagent solution may be applied to the composite semipermeable membrane or the composite semipermeable membrane may be immersed in the reagent solution. Any solvent may be used for dissolving the reagent as long as the solvent can dissolve the reagent yet the composite semipermeable membrane is not eroded. The solution may contain a surfactant, an acidic compound, an alkaline compound or the like as long as it does not interfere with the reaction between the amino group and the reagent.

A part of the produced diazonium salt or a derivative thereof is subsequently converted into a different functional group. Apart of the diazonium salt or a derivative thereof is converted into a phenolic hydroxyl group by reacting with water, for example. Further, when it is brought into contact with a solution containing chloride ion, bromide ion, cyanide ion, iodide ion, boroboric acid, hypophosphorous acid, sodium bisulfite, sulfite ion, aromatic amine, hydrogen sulfide, thiocyanic acid, or the like, it is converted into the corresponding functional group. Further, when it is brought into contact with an aromatic amine, a diazo coupling reaction occurs and an aromatic group can be introduced onto the membrane surface. These reagents may be used alone or in combination, or the diazonium salt or a derivative thereof may be brought into contact with different reagents several times.

Examples of the reagent that causes the diazo coupling reaction include compounds having an electron-rich aromatic ring or a heteroaromatic ring. Examples of the compounds having an electron-rich aromatic ring or heteroaromatic ring include an unsubstituted heteroaromatic ring compound, an aromatic compound having an electron-donating substituent, and a heteroaromatic ring compound having an electron-donating substituent. Examples of the electron-donating substituent include amino group, ether group, thioether group, alkyl group, alkenyl group, alkynyl group, and

aryl group. Specific examples of the above compounds include aniline; methoxyaniline bonded to the benzene ring at any of the ortho-, meta-, and para-positions; phenylenediamine in which two amino groups are bonded to the benzene ring at the ortho-, meta-, or para-position; 1,3,5-triaminobenzene; 1,2,4-triaminobenzene; 3,5-diaminobenzoic acid; 3-aminobenzylamine; 4-aminobenzylamine; sulfanilic acid; 3,3'-dihydroxybenzidine; 1-aminonaphthalene; 2-aminonaphthalene; and N-alkylated products of these compounds.

(2-2-5) Step of Crosslinking Aliphatic Polyamide

The method for producing a composite semipermeable membrane may further include a step (e) of crosslinking the aliphatic polyamide.

The step (e) may be performed after the step (b), or may be performed when the aliphatic polyamide is synthesized in advance. In a case where the reaction of the polyfunctional aliphatic amine and the polyfunctional aliphatic carboxylic acid is used for the synthesis of the aliphatic polyamide, when the polyfunctional aliphatic amine has three or more primary or secondary amino groups, or polyfunctional aliphatic carboxylic acid has three or more carboxylic acids, the aliphatic polyamide is crosslinked. Moreover, a reagent containing a functional group which reacts with the carboxy group or amino group held by the aliphatic polyamide may be used. For example, a compound having a plurality of epoxy groups can be used as a crosslinking agent. Moreover, a method for performing such crosslinking is not particularly limited, and the reagent solution can be applied to the composite semipermeable membrane, or the composite semipermeable membrane is immersed in the reagent solution. Any solvent can be used for dissolving the reagent as long as the solvent can dissolve the reagent and the composite semipermeable membrane is not eroded.

(2-2-6) Other Steps

The method for producing a composite semipermeable membrane may include additional steps other than those described above.

For example, the separation functional layer obtained by the method described above (the method including at least steps (a) and (b)) is washed with hot water within a range of 25°C or higher and 90°C or lower, for 1 minute to 60 minutes. The resulting composite semipermeable membrane has improved solute blocking performance and permeate amount. This washing process may be performed repeatedly as long as it is done after the step (a). However, if the temperature of the hot water is too high, the chemical resistance decreases when cooled rapidly after washing with hot water. Therefore, it is preferable to wash with hot water at a temperature falling within a range of 25°C or higher and 60°C or lower. In addition, when washing with hot water is carried out at a high temperature of 61°C or higher and 90°C or lower, it is preferable to cool slowly after washing with hot water. For example, a method for cooling to room temperature by bringing into contact with lower temperature water stepwise may be employed.

In the step of washing with hot water, acid or alcohol may be contained in the hot water. By containing acid or alcohol, it becomes easier to control the formation of hydrogen bonds in the crosslinked aromatic polyamide. Examples of the acid include inorganic acids such as hydrochloric acid, sulfuric acid, phosphoric acid and the like; organic acids such as citric acid, oxalic acid and the like. Concentration of the acid is preferably adjusted to be pH 2 or less, more preferably pH 1 or less. Examples of the alcohol include monohydric alcohols such as methyl alcohol, ethyl alcohol, isopropyl alcohol and the like; and polyhydric alcohols such as ethylene glycol, glycerin and the like. Concentration of the alcohol preferably falls within a range of 10 wt% or more and 100 wt% by weight or less, more preferably within a range of 10 wt% or more and 50 wt% or less.

3. Utilization of Composite Semipermeable Membrane

The composite semipermeable membrane of the present invention thus produced can be suitably used as a spiral type composite-semipermeable-membrane element which is obtained by winding the composite semipermeable membrane around a cylindrical water collecting tube having many perforations, together with a raw-water channel member such as a plastic net and a permeate channel member such as tricot and optionally with a film for enhancing pressure resistance. In addition, such elements can be connected serially or in parallel and disposed in a pressure vessel, thereby configuring a composite-semipermeable-membrane module.

Furthermore, the composite semipermeable membrane, or its element or module can be combined with a pump for supplying raw water thereto, a device for pretreating the raw water, etc., thereby configuring a fluid separator. By using this separator, raw water can be separated into permeate, such as drinking water, and a concentrate which has not passed through the membrane. Thus, water for an intended purpose can be obtained.

Higher operating pressures for the fluid separator improve the salt removal ratio, but results in an increase in the amount of energy necessary for the operation. Because of this and in view of the durability of the composite semipermeable membrane, the operating pressure at the time when water to be treated is passed through the composite

semipermeable membrane should preferably be 0.1 MPa or more and 10 MPa or less. Higher feed-water temperatures result in a decrease in salt removal ratio, and a decrease in salt removal ration leads the membrane permeation flux decrease. Thus, the temperature of the feed water should preferably be 5°C or higher and 45°C or lower. Concerning the pH of the feed water, high pH values may result in the occurrence of scales of magnesium and the like, in the case of high-salt-concentration feed water such as seawater. In addition, there is a fear of membrane deterioration due to high-pH operation. It is hence preferred to operate the fluid separator in a neutral region.

Examples of the raw water to be treated with the composite semipermeable membrane of the present invention include liquid mixtures containing TDS (total dissolved solids) of 500 mg/L to 100 g/L, such as seawater, brackish water, and wastewater. In general, the TDS refers to the amount of total dissolved solids and is expressed in "weight/volume" or is expressed in "weight ratio". According to a definition, it can be calculated from the weight of a residue remaining after a solution filtered through a 0.45-μm filter is vaporized at a temperature of 39.5°C to 40.5°C. More simply, practical salinity (S) is converted to salt.

EXAMPLES

The present invention will be explained below in more detail by reference to Examples, but the present invention is not limited by the following Examples in any way.

[1. Measurement of Properties]

(NaCl Removal Ratio)

Evaluation water adjusted to have a temperature of 25°C, pH of 7, and a sodium chloride concentration of 2,000 ppm was Fed to the composite semipermeable membranes at an operating pressure of 1.55 MPa to carry out membrane filtration. The electric conductivity of the feed water and the permeated water were respectively measured with an electric conductivity meter (manufactured by Toa Denpa Kogyo), and the respective practical salinity, that is, the NaCl concentration was obtained. The NaCl removal ratio of the membrane was calculated based on the NaCl concentration thus obtained the following equation:

$$\text{NaCl removal ratio (\%)} = 100\times \{1-[(\text{NaCl concentration in permeate})/(\text{NaCl concentration in feed water})]\}$$

(Permeate Amount)

In the test in the preceding paragraph, the membrane permeate amount of the feed water (NaCl aqueous solution) was measured and converted to permeate amount ($m^3$) per $m^2$ of the membrane area per day, which was represented as membrane permeation flux ($m^3/m^2$/day).

The membrane performance was determined as follows. First, a permeate amount was measured when an aqueous solution with a temperature of 25°C, pH of 7, and a NaCl concentration of 2,000 mg/L was filtered for 2 hours at a pressure of 1.55 MPa, and it was taken as an initial permeate amount (F1). Subsequently, a permeate amount was measured when polyoxyethylene (10) octylphenyl ether (POEOPE) was added to the aqueous solution so as to have a concentration of 150 mg/L and the resultant mixture was filtered for 2 hours, and this was taken as F2, and a value of F2/F1 was calculated as a permeate amount retention ratio.

Regarding a permeate amount (F3) after contact with alkali, a permeate amount was measured when the membrane was brought into contact with an aqueous solution with a NaCl concentration of 500 mg/l, a temperature of 25°C and pH of 13, for 24 hours, and washed with pure water with a temperature of 25°C and pH of 7, followed by carrying out membrane filtration of the aqueous solution with a temperature of 25°C, pH of 7, and a NaCl concentration of 2,000 mg/L for 2 hours at a pressure of 1.55 MPa, and this is taken as F3. A permeate amount was measured when POEOPE was subsequently added to the aqueous solution to have a concentration of 150 mg/L and the resultant mixture was filtered for 2 hours, and it was taken as F4, and value of F4/F3 was calculated as a permeate amount retention ratio after contact with alkali.

(Fiber Orientation Degree of Substrate)

Ten sample pieces were taken at random from the nonwoven fabric, photographed with a scanning electron microscope magnification of 100 to 1,000. Total of 100 fibers, 10 fibers from each sample, were taken and measured

for an angle when a longitudinal direction (horizontal direction) of the nonwoven fabric was defined as 0° and a width direction (lateral direction) of the nonwoven fabric was defined as 90°, and a fiber orientation degree was determined by rounding off the first decimal place from the average values of the measured angles.

(Air Permeability)

Air permeability was measured using a Frazier type air permeability tester according to JIS L1096 (2010). Sample pieces of 200 mm × 200 mm were cut out from the substrate. The sample pieces were mounted on the Frazier air permeability tester. The suction fan and the air holes were adjusted such that the pressure of the inclination barometer reaches 125 Pa. The air permeability was obtained based on the pressure indicated by the vertical barometer at this time and types of air holes used during measurement. KES-F8-AP1 Air Permeability Tester (manufactured by KATO TECH) was used as the Frazier type air permeability tester.

(Contact Angle)

The contact angle was obtained by using Contact Angle Meter (manufactured by Kyowa Interface Science). 1.6 mg of distilled water was dropped onto the surface of the separation functional layer of the composite semipermeable membrane, and an angle was calculated from an apex of the water drop, and a contact point between the water drop and a laminated film, measured 5 seconds after the dropping. The measurement locations were selected as appropriate to perform a 5-point measurement, and an average value of the measured calculated angles is defined as the contact angle.

(Hydrolysis Method)

The separation functional layer was dissolved in 40 wt% NaOH aqueous solution and heated at 100°C for 16 hours to perform alkaline hydrolysis. The molecular weight of the compound obtained by alkaline hydrolysis of the separation functional layer was calculated by ESI-MS (electrospray ionization mass spectrometry). The measurement conditions for ESI-MS are as follows.

<Measurement Conditions for ESI-MS>

The compound resulting from the alkaline hydrolysis of the separation functional layer was dissolved in a mixed solution of dichloromethane and methanol (mixing ratio: 1 mL/1 mL), and the mixture was injected into LTQ Orbitrap (manufactured by Thermo Scientific), and an ESI-MS spectrum was recorded.

(Molecular Weight Measurement Method)

A polymer obtained in each synthesis example was diluted with 20 mM phosphate buffer (pH 7.4) to make 1.0 w/v%, and this solution was filtered through a 0.45 μm membrane filter to obtain a test solution. Weight average molecular weight was measured and calculated by GPC (gel permeation chromatography). The measurement conditions for GPC analysis are as follows.

<Measurement Conditions for GPC Analysis>

Column: TSKgel PWXL-CP (manufactured by Tosoh Corporation); elution solvent: 20 mM phosphate buffer (pH 7.4); reference substance: polyethylene glycol (manufactured by Polymer Laboratories Ltd.); detection: differential refractometer RI-8020 (manufactured by Tosoh Corporation); flow rate: 0.5 mL / min; amount of sample solution used: 10 μL; and column temperature: 45°C.

[2. Preparation of Composite Semipermeable Membrane]

(2-1. Synthesis of Aliphatic Polyamide)

(Synthesis Example 1)

An aqueous solution containing 5 wt% of N-[3-(aminoethyl)]methacrylamide hydrochloride (AEMAm) and 5 wt% of acrylic acid (AA) was prepared to make the solution of pH 3, and nitrogen bubbling was conducted. 3 wt% of sodium persulfate was then added to the solution as an initiator, and the polymerization reaction was carried out at 70°C

for 2 hours to obtain a polymer having a weight average molecular weight of 7,100 (PAA-co-PAEMAm).

(Synthesis Example 2)

A polymer having a weight average molecular weight of 12,000 (PAA-co-PMOEDMAP) was obtained in the same manner as Synthesis Example 1 except that 3-[[2-(methacryloyloxy)ethyl)]dimethylammonio] propionate (MOEDMAP) was used instead of AEMAm.

(Synthesis Example 3)

A solution containing 5 wt% of succinic acid and 10 wt% of ethylenediamine was prepared and the solution was adjusted to have pH 10 with sulfuric acid aqueous solution. DMT-MM was mixed with the prepared solution as a condensation accelerator to make a 1 wt% aqueous solution, and the solution was polymerized at 25°C for 24 hours to obtain aliphatic polyamide having a weight average molecular weight of 3,600.

(Synthesis Example 4)

An aliphatic polyamide having a weight average molecular weight of 4,800 was obtained in the same manner as Synthesis Example 3 except that ethylenediaminetetraacetic acid (EDTA) was used instead of succinic acid.

(Synthesis Example 5)

An aliphatic polyamide having a weight average molecular weight of 38,000 was obtained in the same manner as Synthesis Example 3 except that polyacrylic acid (PAA) having a weight average molecular weight of 5,000 was used instead of succinic acid.

(Synthesis Example 6)

An aqueous solution containing 0.2 wt% of PAA-co-PAEMAm obtained in Synthesis Example 1 was prepared and the solution was adjusted to pH 11. DMT-MM was mixed with the prepared solution as a condensation accelerator so as to make a 0.1 wt% aqueous solution, and the solution was polymerized at 25°C for 24 hours to obtain aliphatic polyamide having a weight average molecular weight of 259,000.

(Synthesis Example 7)

An aqueous solution containing 0.05 wt% of PAA having a molecular weight of 5,000 and 0.01 wt% of chitosan (degree of deacetylation: 80%) having a molecular weight of 50,000 was prepared, and the solution was adjusted to have pH 11 with sulfuric acid aqueous solution. DMT-MM was mixed with the prepared solution as a condensation accelerator so as to make 1 wt% aqueous solution, and the solution was polymerized at 25°C for 24 hours to obtain aliphatic polyamide having a weight average molecular weight of 124,000.

(Synthesis Example 8)

An aqueous solution containing 0.05 wt% of polymethacrylic acid (PMA) having a molecular weight of 5,400 and 0.05 wt% of polyallylamine (PAAm) having a molecular weight of 3,000 was prepared, and the solution was adjusted to have pH 11 with sulfuric acid aqueous solution. DMT-MM was mixed with the prepared solution as a condensation accelerator so as to make 1 wt% aqueous solution, and the solution was polymerized at 25°C for 8 hours to obtain aliphatic polyamide having a weight average molecular weight of 89,000.

(2-2. Preparation of Composite Semipermeable Membrane)

(Comparative Example 1)

15.0 wt% DMF solution of polysulfone (PSf) was cast on a polyester nonwoven fabric (air permeability: 2.0 $cc/cm^2/sec$) made of long fibers at 25°C, and immediately immersed and left in pure water for 5 minutes, and a support membrane having a porous support layer with a thickness of 40 μm was thus prepared.

After immersing the support membrane in 3.5 wt% m-PDA aqueous solution, the excess aqueous solution was removed, and n-decane solution in which TMC was dissolved to make the concentration of 0.14 wt% was further applied

onto a surface of the porous support layer to get the surface thereof wet completely. For removing excess solution from the membrane, the membrane was held vertically to drain, dried at 25°C using a blower, and then washed with pure water at 40°C, thereby obtaining a composite semipermeable membrane of Comparative Example 1.

(Comparative Example 2)

The composite semipermeable membrane obtained in Comparative Example 1 was immersed for 1 minute in 0.3 wt% sodium nitrite aqueous solution which was adjusted to have pH 3 and 35°C. The pH of sodium nitrite was adjusted with sulfuric acid. After washing with pure water at 20°C, a composite semipermeable membrane of Comparative Example 2 was obtained.

(Comparative Example 3)

A solution, in which polyvinyl alcohol (PVA) having a saponification degree of 99% and a weight average molecular weight of 2,000 was dissolved in a 3:7 solution of isopropyl alcohol and water to make the concentration of 0.25 wt%, was applied onto the composite semipermeable membrane obtained in Comparative Example 1, and dried at 130°C for 5 minutes, thereby obtaining a composite semipermeable membrane of Comparative Example 3 in which PVA was disposed on the crosslinked aromatic polyamide.

(Comparative Example 4)

While carrying out pure water flow operation using the composite semipermeable membrane obtained in Comparative Example 1, polyethyleneimine (PEI) having a weight average molecular weight of 25,000 was added to the feed pure water to make 0.1 wt% aqueous solution. The operation was further carried out for 1 hour to bring the membrane into contact with the aqueous solution, thereby obtaining a composite semipermeable membrane of Comparative Example 4.

(Comparative Example 5)

The composite semipermeable membrane obtained in Comparative Example 1 was brought into contact with aqueous solution containing 0.01 wt% of PAA having a weight average molecular weight of 2,000 and 0.1 wt% of DMT-MM at 20°C for 24 hours, and then washed with water, thereby obtaining a composite semipermeable membrane of Comparative Example 5.

(Comparative Example 6)

While carrying out pure water flow operation using the composite semipermeable membrane obtained in Comparative Example 1, PAAm having a weight average molecular weight of 2,000 was added to the feed pure water to make 0.1 wt% aqueous solution. The operation was carried out to bring the membrane into contact with the solution for 30 minutes, and PAA having a weight average molecular weight of 2,000 was added to the feed pure water to make 0.1 wt% aqueous solution. The operation was further carried out for 30 minutes, thereby obtaining a composite semipermeable membrane of Comparative Example 6.

(Comparative Example 7)

A composite semipermeable membrane of Comparative Example 7 was obtained in the same manner as Comparative Example 1, except that the membrane was immersed in the 0.01 wt% PAA-co-PAEMAm aqueous solution of pH 11, obtained in Synthesis Example 1, between the step of drying with the blower and the step of washing with the pure water at 40°C in Comparative Example 1.

(Comparative Example 8)

A composite semipermeable membrane of Comparative Example 8 was obtained in the same manner as Comparative Example 5, except that the PAA-co-PMOEDMAP, obtained in Synthesis Example 2, was used instead of PAA.

(Example 1)

A composite semipermeable membrane of Example 1 was obtained in the same manner as Comparative Example 4, except that the aliphatic polyamide, obtained in Synthesis Example 3, was used instead of PEI.

(Example 2)

A composite semipermeable membrane of Example 2 was obtained in the same manner as Comparative Example 4, except that the aliphatic polyamide, obtained in Synthesis Example 4, was used instead of PEI.

(Example 3)

A composite semipermeable membrane of Example 3 was obtained in the same manner as Comparative Example 4, except that the aliphatic polyamide, obtained in Synthesis Example 5, was used instead of PEI.

(Example 4)

A composite semipermeable membrane in which PEI was disposed on the crosslinked aromatic polyamide, was obtained in the same manner as Comparative Example 7, except that PEI having a weight average molecular weight of 25,000 was used instead of PAA-co-PAEMAm. This composite semipermeable membrane was brought into contact with an aqueous solution containing 0.1 wt% of succinic acid and 0.1 wt% of DMT-MM at 20°C for 24 hours and then washed with water, thereby obtaining a composite semipermeable membrane of Example 4.

(Example 5)

The composite semipermeable membrane obtained in Comparative Example 1 was brought into contact with an aqueous solution containing 0.01 wt% of the aliphatic polyamide obtained in Synthesis Example 6 and 0.1 wt% of DMT-MM at 20°C for 1 hour, and then washed with water, thereby obtaining a composite semipermeable membrane of Example 5.

(Example 6)

The composite semipermeable membrane obtained in Comparative Example 1 was brought into contact with an aqueous solution containing 0.01 wt% of the aliphatic polyamide obtained in Synthesis Example 7 and 0.1 wt% of DMT-MM at 40°C for 1 hour, and then washed with water, thereby obtaining a composite semipermeable membrane of Example 6.

(Example 7)

The composite semipermeable membrane obtained in Comparative Example 5 was brought into contact with an aqueous solution containing 0.01 wt% of PEI having a weight average molecular weight of 600 and 0.1 wt% of DMT-MM at 60°C for 10 minutes, and then washed with water, thereby obtaining a composite semipermeable membrane of Example 7.

(Example 8)

A composite semipermeable membrane of Example 8 was obtained in the same manner as Comparative Example 4, except that the aliphatic polyamide, obtained in Synthesis Example 8, was used instead of PEI.

(Example 9)

The composite semipermeable membrane obtained in Comparative Example 1 was brought into contact with an aqueous solution containing 0.01 wt% of PAA having a weight average molecular weight of 2,000, 0.01 wt% of PEI having a weight average molecular weight of 25,000, and 0.1 wt% of DMT-MM at 20°C for 8 hours, and then washed with water, thereby obtaining a composite semipermeable membrane of Example 9.

(Example 10)

The composite semipermeable membrane obtained in Comparative Example 1 was brought into contact with an aqueous solution containing 0.01 wt% of polyacrylic acid-maleic acid copolymer (PAA-co-PMal) having a weight average molecular weight of 10,000, 0.01 wt% of PEI having a weight average molecular weight of 25,000, and 0.2 wt% of DMT-MM at 40°C for 1 hour, and then washed with water, thereby obtaining a composite semipermeable membrane of Example 10.

Chemical structures, properties and performance values of the separation functional layers of the composite semipermeable membranes obtained as described above are respectively shown in Tables 1 to 3.

Table 1

| | Constitution of Separation Functional Layer other than Aromatic Polyamide | | | | |
|---|---|---|---|---|---|
| | Aliphatic Polyamide | | | | Other Compounds |
| | Polyfunctional Aliphatic Carboxylic Acid | Polyfunctional Aliphatic Amine | Amide Bond with Crosslinked Aromatic Polyamide | Crosslinked/ Non-crosslinked | |
| Comparative Example 1 | | | | | |
| Comparative Example 2 | | | | | |
| Comparative Example 3 | | - | - | - | PVA |
| Comparative Example 4 | | - | - | - | PEI |
| Comparative Example 5 | | | | | PAA |
| Comparative Example 6 | - | - | - | - | PAA, PAAm |
| Comparative Example 7 | - | - | - | - | PAA-co-PAEMAm |
| Comparative Example 8 | - | - | - | - | PAA-co-PMOEDMAP |
| Example 1 | Succinic acid | Ethylene amine | None | Non-crosslinked | - |
| Example 2 | EDTA | Ethylene amine | None | Crosslinked | - |
| Example 3 | PAA | Ethylene amine | None | Crosslinked | - |
| Example 4 | Succinic acid | PEI | Present | Crosslinked | - |
| Example 5 | PAA-co-PAEMAm | PAA-co-PAEMAm | Present | Crosslinked | - |
| Example 6 | PAA | Chitosan | Present | Crosslinked | - |
| Example 7 | PAA | PEI | Present | Crosslinked | - |
| Example 8 | PMA | PAAm | None | Crosslinked | - |
| Example 9 | PAA | PEI | Present | Crosslinked | - |
| Example 10 | PAA-co-PMal | PEI | Present | Crosslinked | - |

Table 2

| | Contact Angle | Compound Obtained by Hydrolysis of Separation Functional Layer | | | | Surface Zeta Potential | | |
|---|---|---|---|---|---|---|---|---|
| | | Polyfunctional Aliphatic Carboxylic Acid | | Polyfunctional Aliphatic Amine | | At pH 6 | At pH 11 | Difference Values at pH 6 and pH 11 |
| | (°) | Weight Average Molecular Weight ≥ 1000 | Solubility in Pure Water 100 g ≥ 1 L | Weight Average Molecular Weight ≥ 1000 | Solubility in Pure Water 100 g ≥ 1 L | (mV) | (mV) | (mV) |
| Comparative Example 1 | 58 | - | - | - | - | -22 | -25 | 3 |
| Comparative Example 2 | 55 | - | - | - | - | -31 | -34 | 3 |
| Comparative Example 3 | 39 | - | - | - | - | -3 | -7 | 4 |
| Comparative Example 4 | 21 | - | - | Yes | Yes | 22 | -5 | 27 |
| Comparative Example 5 | 21 | Yes | Yes | - | - | -27 | -30 | 3 |
| Comparative Example 6 | 19 | Yes | Yes | Yes | Yes | -17 | -30 | 13 |
| Comparative Example 7 | 21 | Yes | Yes | No | Yes | -17 | -29 | 12 |
| Comparative Example 8 | 14 | Yes | Yes | No | Yes | -25 | -29 | 4 |
| Example 1 | 38 | No | Yes | No | Yes | -20 | -32 | 12 |
| Example 2 | 36 | No | Yes | No | Yes | -22 | -30 | 8 |
| Example 3 | 23 | Yes | Yes | No | Yes | -28 | -31 | 3 |
| Example 4 | 27 | No | Yes | Yes | Yes | -14 | -28 | 14 |
| Example 5 | 23 | Yes | Yes | No | Yes | -18 | -31 | 13 |
| Example 6 | 33 | Yes | Yes | Yes | No | -22 | -31 | 9 |
| Example 7 | 18 | Yes | Yes | No | Yes | -4 | -21 | 17 |
| Example 8 | 20 | Yes | Yes | Yes | Yes | -20 | -32 | 12 |
| Example 9 | 20 | Yes | Yes | Yes | Yes | -14 | -28 | 14 |
| Example 10 | 15 | Yes | Yes | Yes | Yes | -11 | -27 | 16 |

Table 3

| | Membrane Performance When Prepared | | Results of Fouling Resistance Test | Results of Fouling Resistance Test after Contact with Alkali |
|---|---|---|---|---|
| | NaCl Removal Ratio | Permeate Amount | Permeate Amount Retention Ratio | Permeate Amount Retention Ratio |
| | (%) | ($m^3/m^2$/day) | (-) | (-) |
| Comparative Example 1 | 98.9 | 0.95 | 0.52 | 0.50 |
| Comparative Example 2 | 99.7 | 1.29 | 0.45 | 0.40 |
| Comparative Example 3 | 99.1 | 0.74 | 0.75 | 0.71 |
| Comparative Example 4 | 98.7 | 0.93 | 0.81 | 0.75 |
| Comparative Example 5 | 99.1 | 0.92 | 0.82 | 0.77 |
| Comparative Example 6 | 99.5 | 0.90 | 0.75 | 0.65 |
| Comparative Example 7 | 99.0 | 0.89 | 0.82 | 0.76 |
| Comparative Example 8 | 99.1 | 0.89 | 0.84 | 0.77 |
| Example 1 | 99.2 | 0.92 | 0.87 | 0.79 |
| Example 2 | 99.2 | 0.91 | 0.89 | 0.82 |
| Example 3 | 99.1 | 0.90 | 0.91 | 0.83 |
| Example 4 | 99.2 | 0.92 | 0.91 | 0.86 |
| Example 5 | 99.3 | 0.92 | 0.91 | 0.87 |
| Example 6 | 99.5 | 1.04 | 0.90 | 0.87 |
| Example 7 | 99.2 | 0.91 | 0.92 | 0.89 |
| Example 8 | 99.4 | 0.89 | 0.93 | 0.90 |
| Example 9 | 99.4 | 0.89 | 0.94 | 0.93 |
| Example 10 | 99.3 | 0.88 | 0.94 | 0.94 |

As stated above, the composite semipermeable membrane of the present invention can have high adhesion prevention ability against membrane foulants and maintain high performance stably over a long period of time.

INDUSTRIAL APPLICABILITY

By using the composite semipermeable membrane of the present invention, raw water can be separated into permeated water such as drinking water and concentrated water that has not permeated through the membrane to obtain water for the intended purpose. The composite semipermeable membrane of the present invention can be suitably used particularly for brine water or seawater desalination.

## Claims

**1.** A composite semipermeable membrane, comprising:

a substrate;
a porous support layer disposed on the substrate; and
a separation functional layer disposed on the porous support layer,
wherein the separation functional layer includes, from the porous support layer side,
a first layer containing a crosslinked aromatic polyamide that is a polymer of a polyfunctional aromatic amine and a polyfunctional aromatic acid chloride, and
a second layer present on the surface of the first layer, the second layer containing an aliphatic polyamide that is present on the first layer, and is a polymer of a polyfunctional aliphatic carboxylic acid and a polyfunctional aliphatic amine,
**characterized in that**
the polyfunctional aliphatic carboxylic acid is a polymer containing a monomer unit derived from at least one compound selected from the group consisting of acrylic acid, methacrylic acid, and maleic acid,
the polyfunctional aliphatic amine includes at least one selected from the group consisting of polyethyleneimine, polyallylamine, polyvinylamine, polydialkylaminoalkyl (meth) acrylate, polydialkylaminoalkyl (meth) acrylamide, polydiallylalkylamine, polydiallylamine, chitosan, and salts thereof,
each of the polyfunctional aliphatic carboxylic acid and the polyfunctional aliphatic amine has molecular weight of 1,000 or more, the molecular weight being determined gel permeation chromatography as described herein, and
each of the polyfunctional aliphatic carboxylic acid and the polyfunctional aliphatic amine has solubility in pure water at 25°C under atmospheric pressure of 100 g/1 L or more.

**2.** The composite semipermeable membrane according to claim 1, wherein a contact angle between a surface of the separation functional layer and pure water is 35° or less, determined as specified in the description.

**3.** The composite semipermeable membrane according to claim 1 or 2, wherein the aliphatic polyamides are crosslinked by at least one of intramolecular crosslinking or intermolecular crosslinking.

**4.** The composite semipermeable membrane according to any one of claims 1 to 3, wherein the aliphatic polyamide is bonded to the crosslinked aromatic polyamide via an amide bond.

**5.** The composite semipermeable membrane according to any one of claims 1 to 4, wherein a surface zeta potential of the separation functional layer at pH 6 falls within a range of ± 15 mV, and the surface zeta potential of the separation functional layer at pH 6 is at least 15 mV higher than a surface zeta potential of the separation functional layer at pH 11, wherein the surface zeta potential is determined as specified in the description.

**6.** A method for producing the composite semipermeable membrane according to any one of claims 1 to 5 comprising: forming the separation functional layer by performing following steps (a) and (b) in this order:

(a) forming a first layer containing a crosslinked aromatic polyamide by performing interfacial polycondensation on the porous support layer using an aqueous solution containing a polyfunctional aromatic amine and an organic solvent solution containing a polyfunctional aromatic acid chloride; and
(b) disposing a second layer on the first layer, the second layer containing an aliphatic polyamide that is a polymer of a polyfunctional aliphatic carboxylic acid and a polyfunctional aliphatic amine, the aliphatic polyamine being defined according to claim 1.

**7.** The method for producing a composite semipermeable membrane according claim 6, wherein the step (b) comprises at least one of following steps (b1) or (b2):

(b1) forming an aliphatic polyamide by polymerizing a polyfunctional aliphatic carboxylic acid and a polyfunctional aliphatic amine, and bringing the aliphatic polyamide into contact with a layer of the crosslinked aromatic polyamide; and
(b2) condensing a polyfunctional aliphatic carboxylic acid and a polyfunctional aliphatic amine on the layer of the crosslinked aromatic polyamide.

**8.** The method for producing a composite semipermeable membrane according to claim 6 or 7, wherein the step (b) further comprises the following step (c):
(c) forming an amide bond between the crosslinked aromatic polyamide and the aliphatic polyamide.

**9.** The method for producing a composite semipermeable membrane according to claim 8, wherein the step (c) comprises promoting formation of the amide bond between the crosslinked aromatic polyamide and the aliphatic polyamide by an amidation accelerator.

**Patentansprüche**

**1.** Semipermeable Verbundmembran, umfassend:

ein Substrat,
eine poröse Trägerschicht, die auf dem Substrat angeordnet ist, und
eine funktionelle Trennschicht, die auf der porösen Trägerschicht angeordnet ist,
wobei die funktionale Trennschicht von der Seite der porösen Trägerschicht her umfasst:

eine erste Schicht, die ein vernetztes aromatisches Polyamid enthält, das ein Polymer eines polyfunktionalen aromatischen Amins und eines polyfunktionalen aromatischen Säurechlorids ist, und
eine zweite Schicht, die auf der Oberfläche der ersten Schicht vorhanden ist, wobei die zweite Schicht ein aliphatisches Polyamid enthält, das auf der ersten Schicht vorhanden ist und ein Polymer einer polyfunktionalen aliphatischen Carbonsäure und eines polyfunktionalen aliphatischen Amins ist,
**dadurch gekennzeichnet, dass**:

die polyfunktionale aliphatische Carbonsäure ein Polymer ist, das eine Monomereinheit enthält, die aus wenigstens einer Verbindung abgeleitet ist, die aus der Acrylsäure, Methacrylsäure und Maleinsäure umfassenden Gruppe ausgewählt ist,
das polyfunktionale aliphatische Amin wenigstens eines enthält, das aus der Polyethylenimin, Polyallylamin, Polyvinylamin, Polydialkylaminalkyl(meth)acrylat, Polydialkylaminalkyl(meth)acrylamid, Polydiallylalkylamin, Polydiallylamin, Chitosan und Salze derselben umfassenden Gruppe ausgewählt ist,
die polyfunktionale aliphatische Carbonsäure und das polyfunktionale aliphatische Amin jeweils ein Molekulargewicht von 1.000 oder mehr aufweisen, wobei das Molekulargewicht wie hier beschrieben durch eine Gelpermeationschromatographie bestimmt wird, und
die polyfunktionale aliphatische Carbonsäure und das polyfunktionale aliphatische Amin jeweils eine Löslichkeit in reinem Wasser bei 25°C unter atmosphärischem Druck von 100 g/1 l oder mehr aufweisen.

**2.** Semipermeable Verbundmembran nach Anspruch 1, wobei der Kontaktwinkel zwischen einer Oberfläche der funktionalen Trennschicht und reinem Wasser 35° oder weniger, bestimmt wie in der Beschreibung spezifiziert, beträgt.

**3.** Semipermeable Verbundmembran nach Anspruch 1 oder 2, wobei die aliphatischen Polyamide durch eine intramolekulare Vernetzung oder eine intermolekulare Vernetzung vernetzt sind.

**4.** Semipermeable Verbundmembran nach einem der Ansprüche 1 bis 3, wobei das aliphatische Polyamid über eine Amidbindung an das vernetzte aromatische Polyamid gebunden ist.

**5.** Semipermeable Verbundmembran nach einem der Ansprüche 1 bis 4, wobei ein Oberflächenzetapotential der funktionalen Trennschicht bei pH 6 in einen Bereich von ± 15 mV fällt und das Oberflächenzetapotential der funktionalen Trennschicht bei pH 6 wenigstens 15 mV höher als das Oberflächenzetapotential der funktionalen Trennschicht bei pH 11 ist, wobei das Oberflächenzetapotential wie in der Beschreibung spezifiziert bestimmt wird.

**6.** Verfahren zum Erzeugen der semipermeablen Verbundmembran gemäß einem der Ansprüche 1 bis 5, umfassend: Ausbilden der funktionalen Trennschicht durch das Durchführen der folgenden Schritte (a) und (b) in dieser Reihenfolge:

(a) Ausbilden einer ersten Schicht, die ein vernetztes aromatisches Polyamid enthält, durch das Durchführen einer Grenzflächenpolykondensation auf der porösen Trägerschicht unter Verwendung einer wässrigen Lösung, die ein polyfunktionales aromatisches Amin und eine organische Lösungsmittellösung mit einem darin enthaltenen polyfunktionalen aromatischen Säurechlorid enthält, und
(b) Anordnen einer zweiten Schicht auf der ersten Schicht, wobei die zweite Schicht ein aliphatisches Polyamid enthält, das ein Polymer einer polyfunktionalen aliphatischen Carbonsäure und eines polyfunktionalen aliphatischen Amins ist, wobei das aliphatische Polyamid gemäß dem Anspruch 1 definiert ist.

7. Verfahren zum Erzeugen einer semipermeablen Verbundmembran nach Anspruch 6, wobei der Schritt (b) wenigstens einen der folgenden Schritte (b1) oder (b2) umfasst:

(b1) Ausbilden eines aliphatischen Polyamids durch das Polymerisieren einer polyfunktionalen aliphatischen Carbonsäure und eines polyfunktionalen aliphatischen Amins, und Bringen des aliphatischen Polyamids in einen Kontakt mit einer Schicht des vernetzten aromatischen Polyamids, und
(b2) Kondensieren einer polyfunktionalen aliphatischen Carbonsäure und eines polyfunktionalen aliphatischen Amins auf der Schicht des vernetzten aromatischen Polyamids.

8. Verfahren zum Erzeugen einer semipermeablen Verbundmembran nach Anspruch 6 oder 7, wobei der Schritt (b) weiterhin den folgenden Schritt (c) umfasst:
(c) Bilden einer Amidbindung zwischen dem vernetzten aromatischen Polyamid und dem aliphatischen Polyamid.

9. Verfahren zum Erzeugen einer semipermeablen Verbundmembran nach Anspruch 8, wobei der Schritt (c) das Fördern einer Bildung der Amidbindung zwischen dem vernetzten aromatischen Polyamid und dem aliphatischen Polyamid durch einen Amidierungsbeschleuniger umfasst.

**Revendications**

1. Membrane semi-perméable composite, comprenant :

un substrat ;
une couche de support poreuse disposée sur le substrat ; et
une couche fonctionnelle de séparation disposée sur la couche de support poreuse,
dans laquelle la couche fonctionnelle de séparation inclut, à partir du côté couche de support poreuse,
une première couche contenant un polyamide aromatique réticulé qui est un polymère d'une amine aromatique polyfonctionnelle et d'un chlorure d'acide aromatique polyfonctionnel, et
une deuxième couche présente sur la surface de la première couche, la deuxième couche contenant un polyamide aliphatique qui est présent sur la première couche, et est un polymère d'un acide carboxylique aliphatique polyfonctionnel et d'une amine aliphatique polyfonctionnelle, **caractérisée en ce que**
l'acide carboxylique aliphatique polyfonctionnel est un polymère contenant une unité monomère dérivée d'au moins un composé choisi dans le groupe constitué par l'acide acrylique, l'acide méthacrylique et l'acide maléique,
l'amine aliphatique polyfonctionnelle inclut au moins une amine choisie dans le groupe constitué par la polyéthylèneimine, la polyallylamine, la polyvinylamine, un poly((méth)acrylate de dialkylaminoalkyle), un polydialkylaminoalkyl(méth)acrylamide, une polydiallylalkylamine, la polydiallylamine, le chitosane et leurs sels,
chacun parmi l'acide carboxylique aliphatique polyfonctionnel et l'amine aliphatique polyfonctionnelle a un poids moléculaire de 1 000 ou plus, le poids moléculaire étant déterminé par chromatographie par perméation de gel comme décrit dans le présent document, et
chacun parmi l'acide carboxylique aliphatique polyfonctionnel et l'amine aliphatique polyfonctionnelle a une solubilité dans l'eau pure à 25 °C sous la pression atmosphérique de 100 g/1 L ou plus.

2. Membrane semi-perméable composite selon la revendication 1, dans laquelle un angle de contact entre une surface de la couche fonctionnelle de séparation et l'eau pure est de 35 ° ou moins, déterminé comme indiqué dans la description.

3. Membrane composite semi-perméable selon la revendication 1 ou 2, dans laquelle les polyamides aliphatiques sont réticulés par au moins une parmi une réticulation intramoléculaire ou une réticulation intermoléculaire.

4. Membrane semi-perméable composite selon l'une quelconque des revendications 1 à 3, dans laquelle le polyamide aliphatique est lié au polyamide aromatique réticulé par une liaison amide.

5. Membrane semi-perméable composite selon l'une quelconque des revendications 1 à 4, dans laquelle un potentiel zêta de surface de la couche fonctionnelle de séparation à pH 6 se situe dans une plage de ± 15 mV, et le potentiel zêta de surface de la couche fonctionnelle de séparation à pH 6 est au moins 15 mV plus élevé qu'un potentiel zêta de surface de la couche fonctionnelle de séparation à pH 11, dans laquelle le potentiel zêta de surface est déterminé comme spécifié dans la description.

**6.** Procédé de production de la membrane semi-perméable composite selon l'une quelconque des revendications 1 à 5, comprenant :
la formation de la couche fonctionnelle de séparation en réalisant les étapes (a) et (b) suivantes dans cet ordre :

(a) la formation d'une première couche contenant un polyamide aromatique réticulé en effectuant une polycondensation interfaciale sur la couche de support poreuse en utilisant une solution aqueuse contenant une amine aromatique polyfonctionnelle et une solution de solvant organique contenant un chlorure d'acide aromatique polyfonctionnel ; et
(b) la disposition d'une deuxième couche sur la première couche, la deuxième couche contenant un polyamide aliphatique qui est un polymère d'un acide carboxylique aliphatique polyfonctionnel et d'une amine aliphatique polyfonctionnelle, la polyamine aliphatique étant définie selon la revendication 1.

**7.** Procédé de production d'une membrane semi-perméable composite selon la revendication 6, dans lequel l'étape (b) comprend au moins une des étapes suivantes (b1) ou (b2) :

(b1) la formation d'un polyamide aliphatique par polymérisation d'un acide carboxylique aliphatique polyfonctionnel et d'une amine aliphatique polyfonctionnelle, et la mise en contact du polyamide aliphatique avec une couche du polyamide aromatique réticulé ; et
(b2) la condensation d'un acide carboxylique aliphatique polyfonctionnel et d'une amine aliphatique polyfonctionnelle sur la couche du polyamide aromatique réticulé.

**8.** Procédé de production d'une membrane semi-perméable composite selon la revendication 6 ou 7, dans lequel l'étape (b) comprend en outre l'étape (c) suivante :
(c) la formation d'une liaison amide entre le polyamide aromatique réticulé et le polyamide aliphatique.

**9.** Procédé de production d'une membrane semi-perméable composite selon la revendication 8, dans lequel l'étape (c) comprend la promotion de la formation de la liaison amide entre le polyamide aromatique réticulé et le polyamide aliphatique par un accélérateur d'amidation.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 0085111 A1
- EP 1958685 A1
- JP 10066972 A
- WO 199734686 A
- WO 2014133132 A
- WO 201546582 A